# EUROPEAN PATENT SPECIFICATION

(11) **EP 4 286 999 B1**
(45) Date of publication and mention of the grant of the patent: **02.07.2025**
(21) Application number: 22759930.5
(22) Date of filing: 03.02.2022
(51) Int. Cl.: G06F 3/041, G06F 1/16, G06F 3/0354, G06F 3/038, G06F 3/14, G06F 3/046

(54) **FOLDABLE ELECTRONIC DEVICE INCLUDING PLURALITY OF DIGITIZERS**
FALTBARE ELEKTRONISCHE VORRICHTUNG MIT MEHREREN DIGITALISIERERN
DISPOSITIF ÉLECTRONIQUE PLIABLE COMPORTANT UNE PLURALITÉ DE NUMÉRISEURS GRAPHIQUES

(30) Priority: 24.02.2021 KR 20210024583
(43) Date of publication of application: 06.12.2023
(73) Proprietor: Samsung Electronics Co., Ltd., Suwon-si, Gyeonggi-do 16677 (KR)
(72) Inventor: AN, Jungchul, Suwon-si Gyeonggi-do 16677 (KR); PARK, Sangil, Suwon-si Gyeonggi-do 16677 (KR)
(74) Representative: HGF
(86) International application number: PCT/KR2022/001701
(87) International publication number: WO 2022/182012

(56) References cited:
- KR-A- 20140 083 634
- KR-A- 20150 004 579
- KR-A- 20170 044 228
- KR-A- 20200 122 688
- KR-B1- 101 209 514

## Description

### [Technical Field]

Various embodiments relate to a foldable electronic device including a plurality of digitizers.

### [Background Art]

A digitizer included in an electronic device is being developed to receive various inputs from a user through an input device (e.g., a stylus pen). The digitizer may identify the location on a specified electronic device by an input device having a pen function (which may be referred to as a "stylus pen" for the convenience of description in the disclosure) and perform a function corresponding thereto.

The electronic device may detect a magnetic field signal including a resonance frequency generated from a stylus pen through a digitizer using an electromagnetic resonance (hereinafter referred to as EMR) method. The digitizer may generate a signal for identifying the location of a stylus pen, based on an induced electromotive force generated by the magnetic field generated from the stylus pen. KR20200122688A provides details of a foldable electronic device featuring a flexible display and a hinge mechanism that allows the device to transition between folded and unfolded states. The device comprises two housing portions connected by the hinge, each accommodating various electronic components. Flexible printed circuit boards (FPCBs) extend across the hinge area, accommodating bending motions without compromising signal integrity.

### [Detailed Description of the Invention]

### [Technical Problem]

In a foldable electronic device having a plurality of housings, a digitizer may be disposed inside each of the plurality of housings, and a controller may be disposed inside one of the plurality of housings. The controller may be connected to a plurality of digitizers disposed inside the plurality of housings.

In a foldable electronic device having a plurality of housings, a connector-to-connector flexible printed circuits board (C2C FPCB) may be disposed between two adjacent housings, and at least a portion of a conductive wire connecting digitizers disposed inside two adjacent housings and/or at least a portion of a conductive wire connecting a controller and a digitizer may be positioned on the C2C FPCB. The plurality of digitizers electrically connected to one controller may reduce the performance of the digitizer in a foldable electronic device and increase the number of pins provided in the C2C FPCBs connecting the plurality of digitizers.

According to various embodiments of the disclosure, an electronic device may include a first conductive line included in a first digitizer inside a first housing and a second conductive line included in a second digitizer inside a second housing, and may have a structure in which the first conductive line and the second conductive line form a closed loop and in which a conductive line included in a digitizer inside a housing in which the controller is not disposed, among the first conductive line and the second conductive line, is connected to a reference line.

### [Technical Solution]

An electronic device according to an embodiment may include a first housing, a second housing connected to the first housing to be rotatable about a rotation axis, a first digitizer positioned in the first housing and including a plurality of first conductive lines, a second digitizer positioned in the second housing and including a plurality of second conductive lines, and a controller positioned in the first housing, wherein first ends of the plurality of first conductive lines may be respectively connected to a plurality of signal output ends of the controller, wherein second ends of the plurality of first conductive lines may be respectively connected to first ends of the plurality of second conductive lines, and wherein second ends of the plurality of second conductive lines may be respectively connected to reference lines extending from reference ends of the controller into the second digitizer.

An electronic device according to an embodiment may include a plurality of housings connected to be rotatable about one or more rotation axes, a plurality of digitizers respectively positioned in the plurality of housings, and a controller positioned in one of the plurality of housings, wherein a first digitizer among the plurality of digitizers may include first conductive lines, wherein a second digitizer among the plurality of digitizers may include second conductive lines, wherein first ends of the first conductive lines may be connected to first signal output ends of the controller, wherein second ends of the first conductive lines may be connected to first ends of the second conductive lines, wherein second ends of the second conductive lines may be connected to a first reference line extending from a first reference end of the controller into the second digitizer, and wherein a distance between the first digitizer and the controller may be less than a distance between the second digitizer and the controller.

### [Advantageous Effects]

According to an embodiment, there may be provided a foldable electronic device including a plurality of digitizers. An electronic device according to an embodiment may include a first conductive line included in a first digitizer inside a first housing and a second conductive line included in a second digitizer inside a second housing, and may have a structure in which the first conductive line and the second conductive line form a closed loop and in which a conductive line included in a digitizer inside a housing in which the controller is not disposed, among the first conductive line and the second conductive line, is connected to a reference line.

In the case where the reference line is connected to a conductive line included in a digitizer inside a housing where the controller is disposed, a conductive line included in a digitizer inside a housing where the controller is not disposed may be connected to a signal output end of the controller. In order for the conductive line included in the digitizer inside the housing where the controller is not disposed to be connected to the signal output end of the controller, as many conductive wires as the number of formed closed loops must be disposed on the C2C FPCB, so a large number of pins may be included on the C2C FPCB.

On the other hand, in an electronic device according to an embodiment, a conductive line included in a digitizer inside a housing where the controller is not disposed may be connected to a reference line, and a conductive wire, which extends the reference line into the digitizer inside the housing where the controller is not disposed, may be disposed on the C2C FPCB, thereby reducing the number of pins included in the C2C FPCB.

### [Brief Description of Drawings]

FIG. 1 is a block diagram of an electronic device in a network environment according to various embodiments.
FIGS. 2A and 2B illustrate an appearance of a foldable electronic device according to various embodiments.
FIG. 2C is an exploded perspective view of a foldable electronic device according to various embodiments.
FIG. 3 illustrates structures of digitizers in a foldable electronic device according to various embodiments.
FIG. 4 illustrates a layout of conductive lines included in digitizers inside a foldable electronic device according to various embodiments.
FIG. 5 illustrates a layout of conductive lines included in digitizers inside a foldable electronic device according to various embodiments.
FIG. 6 illustrates disposition of conductive wires connecting digitizers and a controller in a foldable electronic device according to various embodiments.
FIG. 7 illustrates disposition of conductive wires connecting digitizers and a controller in a foldable electronic device according to various embodiments.
FIG. 8A illustrates disposition of digitizers and conductive lines included in the digitizers inside a foldable electronic device according to various embodiments.
FIG. 8B illustrates disposition of digitizers and conductive lines included in the digitizers inside a foldable electronic device according to various embodiments.

### [Mode for Carrying out the Invention]

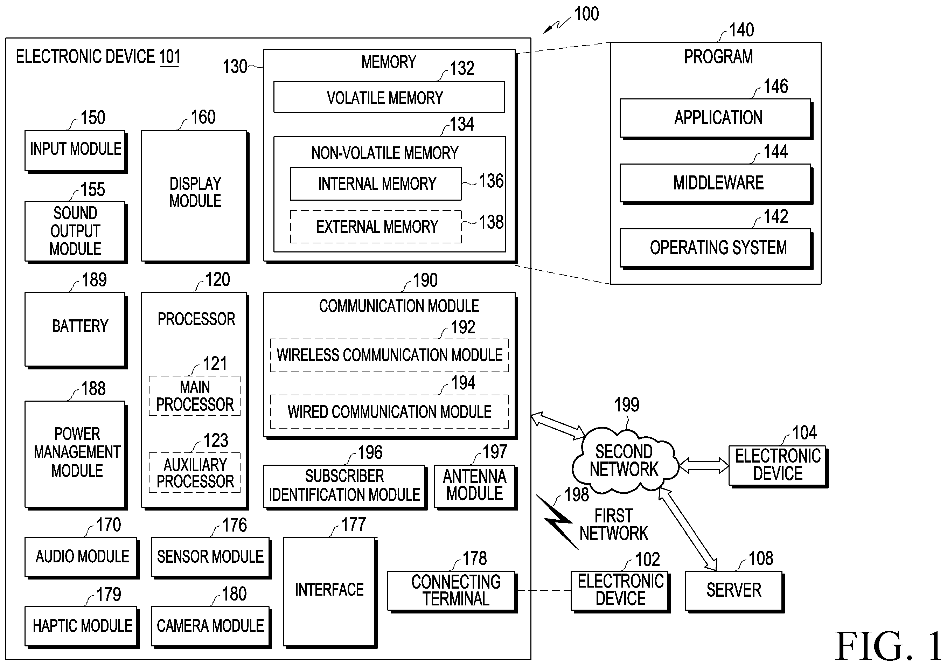

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

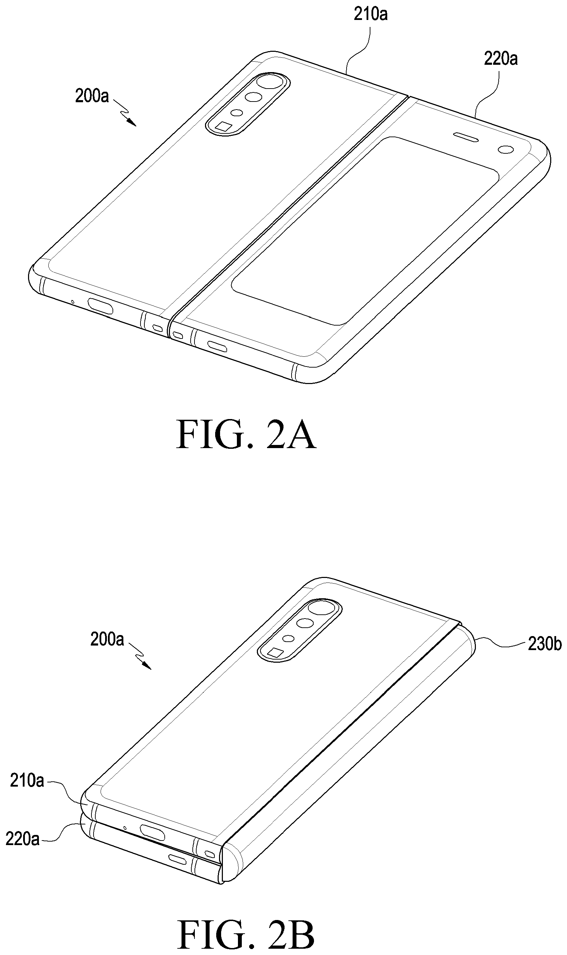

FIGS. 2A and 2B illustrate an appearance of a foldable electronic device according to various embodiments. FIG. 2A illustrates an appearance of a foldable electronic device 200a including two housings when the two housings are unfolded, instead of overlapping each other. According to various embodiments, the foldable electronic device 200a may include a first housing 210a and a second housing 220a.

According to various embodiments, the foldable electronic device may include a structure capable of attaching (or receiving) a stylus pen. For example, a foldable electronic device may include a storage space capable of receiving a stylus pen. As another example, the foldable electronic device may include at least one magnetic material at a position adjacent to an attachment area so that the stylus pen may be attached to the outer part of the housing. The stylus pen may be attached to the outer part of the housing of the foldable electronic device through at least one magnetic material.

FIG. 2B illustrates an appearance of a foldable electronic device 200a including two housings when the two housings overlap each other. According to various embodiments, the foldable electronic device 200a may include a first housing 210a and a second housing 220a. According to various embodiments, the first housing 210a and the second housing 220a may be rotatably connected through a connection part 230b. According to various embodiments, the connection part 230b may include a hinge. According to various embodiments, the first housing 210a and the second housing 220a may rotate around a rotation axis included in the connection part 230b. In an embodiment, when the first housing 210a and the second housing 220a overlap in the foldable electronic device 200a, the flexible display may be substantially invisible from the outside. In some embodiments, in a foldable electronic device (not shown), if two housings overlap each other, the flexible display may be folded so as to be visible to the outside.

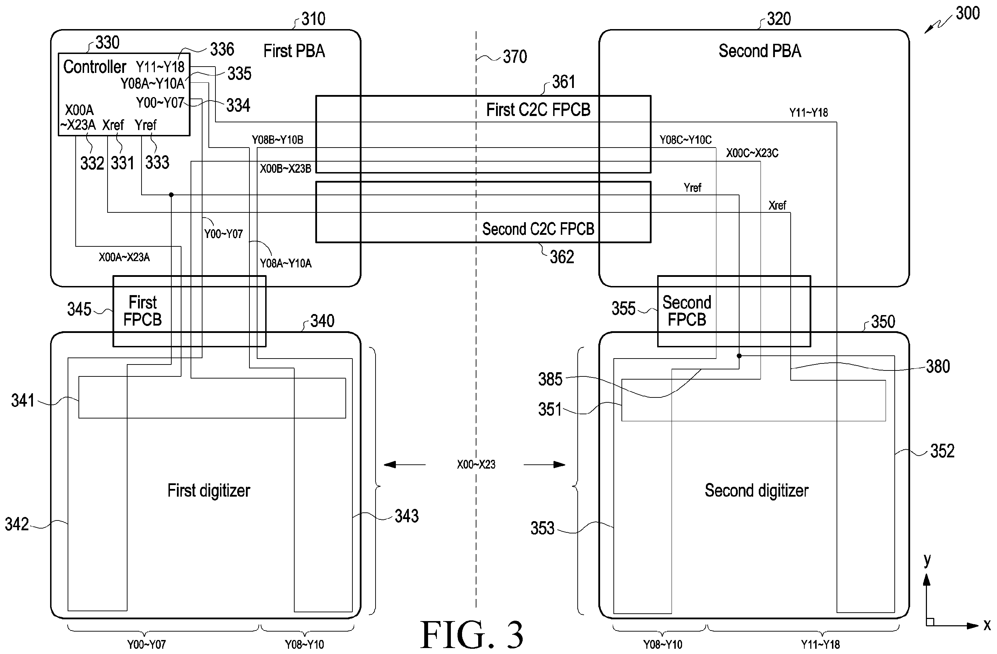

Although a foldable electronic device having two housings is illustrated in FIGS. 2A and 2B and although descriptions will be made based on an example of the foldable electronic device having two housings in FIGS. 3 to 12 below, the foldable electronic device, according to various embodiments, may have three or more housings, and it will be understood by those skilled in the art that a structure described later with reference to FIGS. 3 to 12 may be applied in a similar manner even to the case where the foldable electronic device has three or more housings.

In addition, those skilled in the art may understand that the appearance of the foldable electronic device is illustrated by way of example in FIGS. 2A and 2B and that the appearance of the foldable electronic device according to various embodiments is not limited to the appearance shown in FIGS. 2A and 2B.

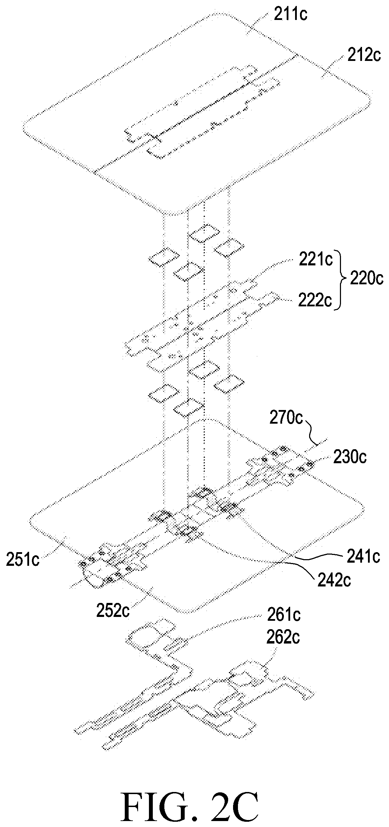

FIG. 2C is an exploded perspective view of a foldable electronic device according to various embodiments. According to various embodiments, a foldable electronic device 200a may include a first digitizer 211c, a second digitizer 212c, a hinge plate 220c, a hinge housing 230c, a first C2C FPCB 241c, a second C2C FPCB 242c, a first support plate 251c, a second support plate 252c, a first PBA 261c, and/or a second PBA 262c may be included.

According to various embodiments, details of a first digitizer 340, a second digitizer 350, a first C2C FPCB 361, a second C2C FPCB 362, a first PBA 310, and a second PBA 320, which will be described with reference to FIG. 3, may be applied substantially in the same manner to the first digitizer 211c, the second digitizer 212c, the first C2C FPCB 241c, the second C2C FPCB 242c, the first PBA 261c, and the second PBA 262c.

According to various embodiments, the hinge plate 220c may include a first hinge plate 221c and a second hinge plate 222c capable of rotating about a rotation axis 270c. According to various embodiments, the first support plate 251c may support the first digitizer 211c. The second support plate 252c may support the second digitizer 212c. The first support plate 251c and the second support plate 252c may rotate about the rotation axis 270c, and as the first support plate 251c and the second support plate 252c rotate, the digitizer 211c and the second digitizer 212c may also rotate.

FIG. 3 illustrates structures of digitizers in a foldable electronic device according to various embodiments. According to various embodiments, a foldable electronic device 300 (e.g., the electronic device 101 or the foldable electronic device 200a) may include a first printed board assembly (PBA) 310, a second PBA 320, a first digitizer 340, a second digitizer 350, a first FPCB 345, a second FPCB 355, a first C2C FPCB 361, and/or a second C2C FPCB 362.

According to various embodiments, the foldable electronic device 300 may include two housings (e.g., the first housing 210a and the second housing 220a), and the line 370 may indicate a central axis about which the two housings rotate. The foldable electronic device 300 is illustrated in FIG. 3 such that the line 370 is parallel to the y-axis in order to explain directions of elements of the foldable electronic device 300. According to various embodiments, the first PBA 310, the first digitizer 340, and the first FPCB 345 may be positioned in the first housing of the foldable electronic device 300, and the second PBA 320, the second digitizer 350, and the second FPCB 355 may be positioned in the second housing of the foldable electronic device 300, and the first C2C FPCB 361 and the second C2C FPCB 362 may electrically connect the first PBA 310 and the second PBA 320 while crossing the rotation axis. Referring to FIGS. 2A and 2B, according to various embodiments, the first housing in which the first PBA 310,the first digitizer 340, and the first FPCB 345 are positioned may be any one of the first housing 210a and the second housing 220a shown in FIGS. 2A and 2B. According to various embodiments, the second housing in which the second PBA 320, the second digitizer 350, and the second FPCB 355 are positioned may be the other of the first housing 210a and the second housing220a in FIGS. 2A and 2B.

According to various embodiments, a controller 330 (e.g., a co-processor 123) may be disposed on the first PBA 310.

According to various embodiments, the first digitizer 340 may include a plurality of conductive lines 341, 342, and 343 to generate a signal for identifying the position of a stylus pen, based on a pen signal generated from the stylus pen. According to various embodiments, the second digitizer 350 may include a plurality of conductive lines 351, 352, and 353 to generate a signal for identifying the position of a stylus pen, based on a pen signal generated from the stylus pen. According to various embodiments, the plurality of conductive lines 341, 342, and 343 and the plurality of conductive lines 351, 352, and 353 may each form an open loop, and a change in the magnetic field generated from a stylus pen passing through the inside of the open loop may induce a current in the plurality of conductive lines 341, 342, and 343 and the plurality of conductive lines 351, 352, and 353. According to various embodiments, a magnetic field generated from the stylus pen may be referred to as a pen signal, and a current, which is induced in the plurality of conductive lines 341, 342, and 343 included in the first digitizer 340 and in the plurality of conductive lines 351, 352, and 353 included the second digitizer 350, or a voltage, which is induced in both ends of the plurality of conductive lines, based on the pen signal, may be used as a signal for identifying the position of the stylus pen.

According to various embodiments, the stylus pen may generate a signal including a resonance frequency by using a resonance circuit included in a printed circuit board disposed inside the stylus pen. For example, when an alternating voltage is applied to a plurality of conductive lines of the digitizers 340 and 350, a magnetic field may be formed, and current may flow through conductive lines inside the stylus pen adjacent to the digitizers 340 and 350 according to the law of electromagnetic induction, thereby generating a signal including a resonance frequency through a resonance circuit inside the stylus pen, which may be recognized by the digitizers 340 and 350. The resonance circuit may include electronic elements such as at least one conductive line (coil), an inductor, and/or a capacitor. According to an embodiment, the resonance circuit may be used to change the strength or frequency of the electromagnetic field depending on a manipulation state of a user. For example, the resonance circuit may provide various frequencies for recognizing a hovering input, a drawing input, a button input, or an erasing input.

According to various embodiments, the first digitizer 340 may include a plurality of first x-conductive lines for generating a signal for identifying the y-directional coordinate of the stylus pen. Although FIG. 3 illustrates 24 first x-conductive lines corresponding to Output signals from X00 to X23, the number of first x-conductive lines included in the first digitizer 340 is not limited according to various embodiments. Only one first x-conductive line 341 among the plurality of first x-conductive lines is shown in FIG. 3 for the convenience of display. For example, the x-directional length of the first x-conductive line 341 may be greater than the y-directional length of the first x-conductive line 341. According to various embodiments, a first end of the first x-conductive line 341 may be connected to one of a plurality of signal output ends 332 of the controller 330, and a second end of the first x-conductive line 341 may be connected to a first end of a second x-conductive line 351, which will be described later.

Although not shown in FIG. 3, according to various embodiments, the plurality of first x-conductive lines may have substantially the same shape as the first x-conductive line 341. In an embodiment, the position or shape of each of the plurality of first x-conductive lines may vary. For example, the respective first x-conductive lines may be arranged at specified intervals in the y direction.

According to various embodiments, the first digitizer 340 may include a plurality of first y-conductive lines and a plurality of third y-conductive lines to generate a signal for identifying the x-direction coordinate of the stylus pen. Although FIG. 3 illustrates eight third y-conductive lines corresponding to Output signals from Y00 to Y07 and three first y-conductive lines corresponding to Output signals from Y08 to Y10, according to various embodiments, the number of first y-conductive lines and third y-conductive lines included in the first digitizer 340 is not limited.

For the convenience of display, only one first y-conductive line 343 among the plurality of first y-conductive lines is shown in FIG. 3, and only one third y-conductive line 342 among the plurality of third y-conductive lines is shown therein. For example, the x-directional lengths of the first y-conductive line 343 and third y-conductive line 342 may be less than the y-directional lengths of the first y-conductive line 343 and third y-conductive line 342. According to various embodiments, the x-directional length of the first y-conductive line 343 may be substantially the same as the x-directional length of the third y-conductive line 342, and the y-directional length of the first y-conductive line 343 may be substantially the same as the y-directional length of the third y-conductive line 342.

According to various embodiments, a first end of the first y-conductive line 343 may be connected to one of the plurality of signal output ends 335 of the controller 330, and a second end of the first y-conductive line 343 may be connected to a first end of a second y-conductive line 353 to be described later. According to various embodiments, a first end of the third y-conductive line 342 may be connected to one of the plurality of signal output ends 334 of the controller 330, and a second end of the third y-conductive line 342 may be connected to a reference end 333 of the controller 330.

Although not shown in FIG. 3, according to various embodiments, the plurality of first y-conductive lines and third y-conductive lines may have substantially the same shape as the first y-conductive line 343 and the third y-conductive line 342.

In an embodiment, the position or shape of each of the plurality of first y-conductive lines or the plurality of third y-conductive lines may vary. For example, the respective first y-conductive lines may be arranged at specified intervals in the x direction. For example, the respective third y-conductive lines may be arranged at specified intervals in the x direction.

According to various embodiments, the second digitizer 350 may include a plurality of second x-conductive lines to generate a signal for identifying the y-directional coordinate of the stylus pen. Although FIG. 3 illustrates 24 second x-conductive lines corresponding to Output signals from X00 to X23, the number of second x-conductive lines included in the second digitizer 350 is not limited according to various embodiments. According to various embodiments, the number of second x-conductive lines included in the second digitizer 350 may be the same as the number of first x-conductive lines included in the first digitizer 340.

Only one second x-conductive line 351 among the plurality of second x-conductive lines is shown in FIG. 3 for the convenience of display. For example, the x-directional length of the second x-conductive line 351 may be greater than the y-directional length of the second x-conductive line 351. According to various embodiments, the first end of the second x-conductive line 351 may be connected to the second end of the first x coil conductive line 341, and a second end of the second x-conductive line 351 may be connected to a reference line 380 extending from the reference end 331 into the second digitizer 340.

Although not shown in FIG. 3, according to various embodiments, the plurality of second x-conductive lines may have substantially the same shape as the second x-conductive line 351. In an embodiment, the position or shape of each of the plurality of second x-conductive lines may vary. For example, the respective second x-conductive lines may be arranged at specified intervals in the y direction.

According to various embodiments, the second digitizer 350 may include a plurality of second y-conductive lines and a plurality of fourth y-conductive lines to generate a signal for identifying the x-directional coordinate of the stylus pen. Although FIG. 3 illustrates three second y-conductive lines corresponding to Output signals from Y08 to Y10 and eight fourth y-conductive lines corresponding to Output signals from Y11 to Y18, the number of the plurality of second y-conductive lines and fourth y-conductive lines included in the second digitizer 350 is not limited according to various embodiments. According to various embodiments, the number of second y-conductive lines may be the same as the number of first y-conductive lines.

For the convenience of display, only one second y-conductive line 353 among the plurality of second y-conductive lines is shown in FIG. 3 and one fourth y-conductive line among the plurality of fourth y-conductive lines 352 is shown therein. For example, the x-directional lengths of the second y-conductive line 353 and fourth y-conductive line 352 may be less than the y-directional lengths of the second y-conductive line 353 and fourth y-conductive line 352. According to various embodiments, the x-directional length of the second y-conductive line 353 may be substantially the same as the x-directional length of the fourth y-conductive line 342, and the x-directional length of the second y-conductive line 353 may be substantially the same as the y-directional length of the fourth y-conductive line 342. According to various embodiments, the x-directional lengths of the second y-conductive line 353 and fourth y-conductive line 352 may be substantially the same as the x-directional lengths of the first y-conductive line 343 and third y-conductive line 342, and the y-directional lengths of the second y-conductive line 353 and fourth y-conductive line 352 may be substantially the same as the y-directional lengths of the first y-conductive line 343 and third y-conductive line 342.

According to various embodiments, the first end of the second y-conductive line 353 may be connected to the second end of the first y-conductive line 343, and a second end of the second y-conductive line 353 may be connected to a reference line 385 extending from the reference end 333 of the controller 330 into the second digitizer 340. According to various embodiments, a first end of the fourth y-conductive line 352 may be connected to one of a plurality of signal output ends 336 of the controller 330, and a second end of the fourth y-conductive line 352 may be connected to the reference line 385 extending from the reference end 333 of the controller 330 into the second digitizer 340.

Although not shown in FIG. 3, according to various embodiments, the plurality of second y-conductive lines and fourth y-conductive lines may have substantially the same shape as the second y-conductive line 353 and the fourth y-conductive line 352.

In an embodiment, the position or shape of each of the plurality of second y-conductive lines or the plurality of fourth y-conductive lines may vary. For example, the respective second y-conductive lines may be arranged at specified intervals in the x direction. For example, the respective fourth y-conductive lines may be arranged at specified intervals in the x direction.

According to various embodiments, the first end of the first x-conductive line 341 may be connected to one of the signal output ends 332 of the controller 330, and the second end of the first x-conductive line 341 may be connected to the first end of the second x-conductive line 351, and the second end of the second x-conductive line 351 may be connected to a reference line 380 extending from the reference end 331 of the controller 330 into the second digitizer 340. For example, the controller 330, the first x-conductive line 341, and the second x-conductive line 351 may form a closed loop.

A magnetic field generated by a stylus pen may generate an induced current in the first x-conductive line 341 and the second x-conductive line 351. At this time, since the first x-conductive line 341 and the second x-conductive line 351 are connected in series, an induced current corresponding to the sum of the magnetic flux passing through the cross-section of the first x-conductive line 341 and the magnetic flux passing through the cross-section of the second x-conductive line 351, among the magnetic fluxes caused by the pen signal, may flow through the first x-conductive line 341 and the second x-conductive line 351. The induced current flowing through the first x-conductive line 341 and the second x-conductive line 351 or the voltage induced at both ends of the first x-conductive line 341 and the second x-conductive line 351 may be transmitted, as one of the Output signals X00A to X23A,to output ends 332 of the controller 330. The controller 330 may identify the y-directional coordinate of a stylus pen, based on the Output signals X00A to X23A obtained through a plurality of output ends 332.

According to various embodiments, the first end of the first y-conductive line 343 may be connected to the signal output ends 335 of the controller 330, the second end of the first y-conductive line 343 may be connected to the first end of the second y-conductive line 353, and the second end of the second y-conductive line 353 may be connected to the reference line 385 extending from the reference end 333 of the controller 330 into the second digitizer 340. For example, the controller 330, the first y-conductive line 343, and the second y-conductive line 353 may form a closed loop. A magnetic field generated by a stylus pen may generate an induced current in the first y-conductive line 343 and the second y-conductive line 353. At this time, since the first y-conductive line 343 and the second y-conductive line 353 are connected in series, an induced current corresponding to the sum of the magnetic flux passing through the cross-section of the first y-conductive line 343 and the magnetic flux passing through the cross-section of the second y-conductive line 353, among the magnetic fluxes caused by the pen signal, may flow through the first y-conductive line 343 and the second y-conductive line 353. The induced current flowing through the first y-conductive line 343 and the second y-conductive line 353 or the voltage induced at both ends of the first y-conductive line 343 and the second y-conductive line 353 may be transmitted, as one of the Output signals Y08A to Y10A, to output ends 335 of the controller 330.

According to various embodiments, the first end of the third y-conductive line 342 may be respectively connected to the signal output ends 334 of the controller 330, and the second end of the third y-conductive line 342 may be respectively connected to the reference end 333 of the controller 330. A magnetic field generated by a stylus pen may generate an induced current in the third y-conductive line 342. The induced current flowing through the third y-conductive line 342 or the voltage induced at both ends of the third y-conductive line 342 may be transmitted, as one of the Output signals Y00 to Y07, to the output ends 334 of the controller 330.

According to various embodiments, the first end of the fourth y-conductive line 352 may be respectively connected to the plurality of signal output ends 336 of the controller 330, and the second end of the fourth y-conductive line 352 may be connected to a reference line (not shown) extending from the reference end 333 of the controller 330 into the second digitizer 340. A magnetic field generated by a stylus pen may generate an induced current in the fourth y-conductive line 352. The induced current flowing through the fourth y-conductive line 352 or the voltage induced at both ends of the fourth y-conductive line 352 may be transmitted, as one of the Output signals Y11 to Y18, to the output ends 336 of the controller 330.

According to various embodiments, the controller 330 may identify the x-directional coordinate of a stylus pen, based on the Output signals Y08A to Y10A obtained through the output ends 335, the Output signals Y00 to Y07 obtained through the output ends 334, and the Output signals Y11 to Y18 obtained through the output ends 336.

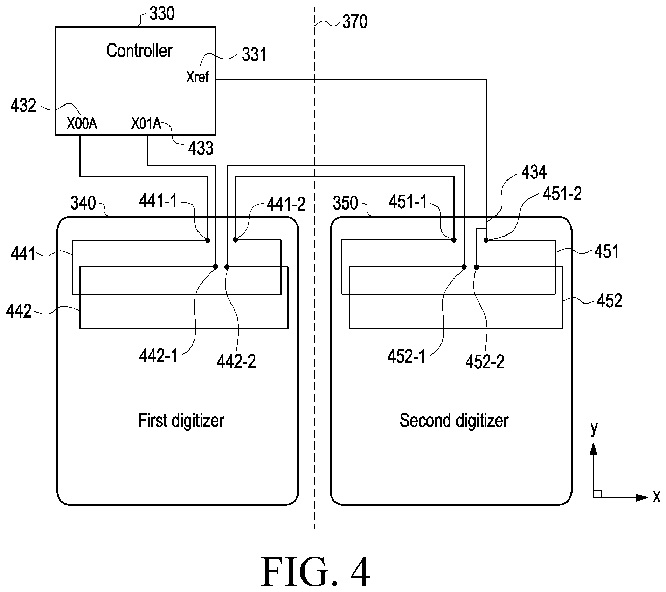

FIG. 4 illustrates a layout of conductive lines included in digitizers inside a foldable electronic device according to various embodiments. According to various embodiments, a foldable electronic device (e.g., the electronic device 101 or the electronic device 200a) may include a controller 330, a first digitizer 340, and a second digitizer 350. Although the foldable electronic device shown in FIG. 4 is illustrated by omitting some elements of the foldable electronic device 300 in FIG. 3, according to various embodiments, the foldable electronic device shown in FIG. 4 may be substantially the same as the foldable electronic device 300 shown in FIG. 3.

Referring to FIG. 4, the foldable electronic device may include a first housing and a second housing, and the line 370 may indicate a central axis about which the two housings rotate. The foldable electronic device 400 is illustrated in FIG. 4 such that the line 370 is parallel to the y-axis in order to explain directions of elements of the foldable electronic device 400. According to various embodiments, the controller330 and the first digitizer 340 may be positioned in the first housing of the foldable electronic device, and the second digitizer 350 may be positioned in the second housing of the foldable electronic device. Referring to FIGS. 2A and 2B, according to various embodiments, the first housing may be any one of the first housing 210a and the second housing 220a shown in FIGS. 2A and 2B. According to various embodiments, the second housing may be the other of the first housing 210a and the second housing 220a shown in FIGS. 2A and 2B.

According to various embodiments, the first digitizer 340 may include a plurality of first x-conductive lines 441 and 442 to generate signals for identifying the 370y-directional coordinate of a stylus pen. The 370x-directional lengths of the plurality of first x-conductive lines 441 and 442 may be greater than the 370y-directional lengths of the plurality of first x-conductive lines 441 and 442. The plurality of first x-conductive lines 441 and 442 may include a 1-1st x-conductive line 441 or a 1-2nd x-conductive line 442. In FIG. 4, only two of the plurality of first x-conductive lines 441 and 442 are shown for the convenience of display.

According to various embodiments, the second digitizer 350 may include a plurality of second x-conductive lines 451 and 452 to generate signals for identifying the 370y-directional coordinate of a stylus pen. The 370x-directional lengths of the plurality of second x-conductive lines 451 and 452 may be greater than the 370y-directional lengths of the plurality of second x-conductive lines 451 and 452. The plurality of second x-conductive lines 451 and 452 may include a 2-1st x-conductive line 451 or a 2-2nd x-conductive line 452.In FIG. 3, only two of the plurality of second x-conductive lines 451 and 452 are shown for the convenience of display.

According to various embodiments, a first end 441-1 of the 1-1st x-conductive line 441 may be connected to a first signal output end 432 of the controller 330, and a first end 442-1 of the 1-2nd x-conductive line 442 may be connected to a second signal output end 433 of the controller 330. A second end 441-2 of the 1-1st x-conductive line 441 may be connected to a first end 451-1 of the 2-1st x-conductive line 451, and a second end 442-2 of the 1-2nd x-conductive line 442 may be connected to a first end 452-1 of the 2-2nd x-conductive line 452. A second end 451-2 of the 2-1st x-conductive line 451 or a second end 452-2 of the 2-2nd x-conductive line 452 may be connected to a reference line 434 extending from the reference end 331 of the controller 330 into the second digitizer 340. For example, the controller 330, the 1-1st x-conductive line 441, and the 2-1st x-conductive line 451 may form a closed loop, and the controller 330, the 1-1st x-conductive line 451 may form a closed loop, and the controller 330, the 1-2nd x-conductive line 442, and the 2-2nd x-conductive line 452 may form a closed loop.

According to various embodiments, a magnetic field generated by a stylus pen may generate an induced current in the 1-1st x-conductive line 441, the 1-2nd x-conductive line 442, and the 2-1st x-conductive line 451 or 452 or the 2-2nd x-conductive line 452. At this time, since the 1-1st x-conductive line 441 and the 2-1st x-conductive line 451 are connected in series, an induced current corresponding to the sum of the magnetic flux passing through the cross-section of the 1-1st x-conductive line 441 and the magnetic flux passing through the cross-section of the 2-1st x-conductive line 451, among the magnetic fluxes caused by the pen signal, may flow through the 1-1st x-conductive line 441 and the 2-1st x-conductive line 451. The induced current flowing through the 1-1st x-conductive line 441 and the 2-1st x-conductive line 451 or the voltage induced at both ends of the 1-1st x-conductive line 441 and the 2-1st x-conductive line 451 may be transmitted, as an Output signal X00A, to an output end 432 of the controller 330. In substantially the same manner, the induced current flowing through the 1-2nd x-conductive line 442 and the 2-2nd x-conductive line 452 or the voltage induced at both ends of the 1-2nd x-conductive line 442 and the 2-2nd x-conductive line 452 may be transferred, as an Output signal X01A, to an output end 433 of the controller 330. The controller 330 may identify the 370y-directional coordinate of a stylus pen, based on Output signals X00A to X01A obtained through the output ends 432 and 433 and Output signals X02A to X23A obtained through other output ends that are not shown in FIG. 4.

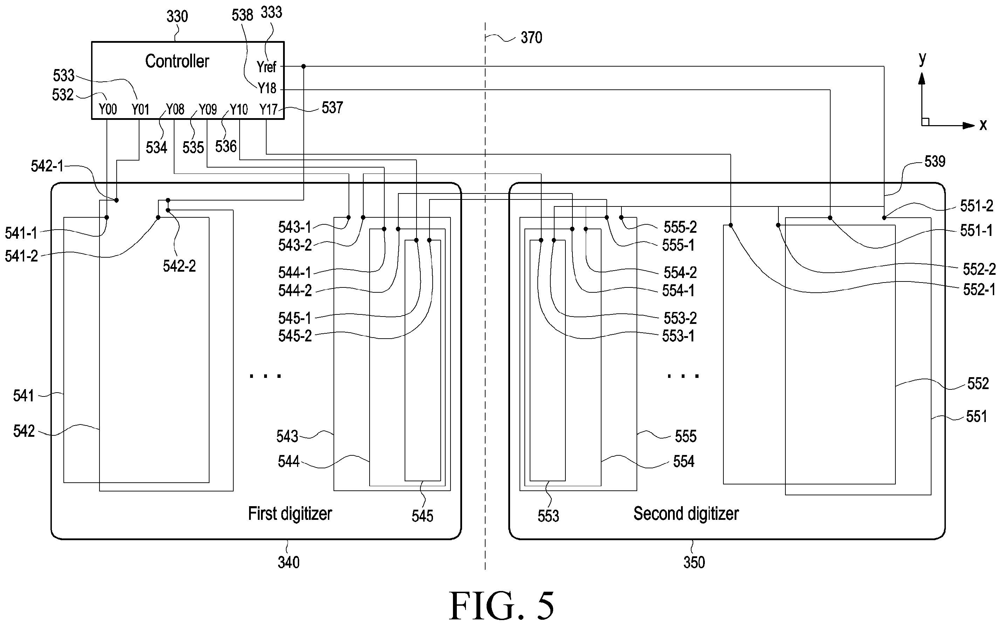

FIG. 5 illustrates a layout of conductive lines included in digitizers inside a foldable electronic device according to various embodiments. According to various embodiments, a foldable electronic device (e.g., the electronic device 101 or the electronic device 200a) may include a controller 330, a first digitizer 340, and a second digitizer 350. Although the foldable electronic device shown in FIG. 4 is illustrated by omitting some elements of the foldable electronic device 300 in FIG. 3, according to various embodiments, the foldable electronic device shown in FIG. 4 may be substantially the same as the foldable electronic device 300 shown in FIG. 3.

Referring to FIG. 5, the foldable electronic device may include two housings (e.g., a first housing 210a and a second housing 220a), and the line 370 may indicate a central axis about which the two housings rotate. The foldable electronic device 500 is illustrated in FIG. 5 such that the line 370 is parallel to the y-axis in order to explain directions of elements of the foldable electronic device 500. According to various embodiments, the controller 330 and the first digitizer 340 may be positioned in the first housing of the foldable electronic device, and the second digitizer 350 may be positioned in the second housing of the foldable electronic device. Referring to FIGS. 2A and 2B, according to various embodiments, the first housing may be any one of the first housing 210a and the second housing 220a shown in FIGS. 2A and 2B. According to various embodiments, the second housing may be the other of the first housing 210a and the second housing 220a shown in FIGS. 2A and 2B.

According to various embodiments, the first digitizer 340 may include a plurality of first y-conductive lines 543, 544, and 545 and a plurality of third y-conductive lines 541 and 542 to generate signals for identifying the x-directional coordinate of a stylus pen. According to various embodiments, the 370x-directional lengths of the plurality of first y-conductive lines 543, 544, and 545 and plurality of third y-conductive lines 541 and 542 may be less than the 370y-directional lengths of the plurality of first y-conductive lines 543, 544, and 545 and plurality of third y-conductive lines 541 and 542. The plurality of first y-conductive lines 543, 544, and 545 may include a 1-1st y-conductive line 543, a 1-2nd y-conductive line 544, or a 1-3rd y-conductive line 545. The plurality of third y-conductive lines 541 and 542 may include a 3-1st y-conductive line 541 or a 3-2nd y-conductive line 542. In FIG. 5, only three of the plurality of first y-conductive lines 543, 544, and 545 are shown and only two of the plurality of third y-conductive lines 541 and 542 are shown for the convenience of display.

According to various embodiments, the second digitizer 350 may include a plurality of second y-conductive lines 553, 554, and 555 and a plurality of fourth y-conductive lines 551 and 552 to generate signals for identifying the x-directional coordinate of a stylus pen. According to various embodiments, the 370x-directional lengths of the plurality of second y-conductive lines 553, 554, and 555 and plurality of fourth y-conductive lines 551 and 552 may be less than the 370y-directional lengths of the plurality of second y-conductive lines 553, 554, and 555 and plurality of fourth y-conductive lines 551 and 552. The plurality of second y-conductive lines 553, 554, and 555 may include a 2-1st y-conductive line 553, a 2-2nd y-conductive line 554, or a 2-3rd y-conductive line 555. The plurality of fourth y-conductive lines 551 and 552 may include a plurality of 4-1st y-conductive lines 551 or a plurality of 4-2nd y-conductive lines 552. In FIG. 3, only three of the plurality of second y-conductive lines 553, 554, and 555 are shown and only two of the plurality of fourth y-conductive lines 551 and 552 are shown for the convenience of display.

According to various embodiments, a first end 543-1 of the 1-1st y-conductive line 543 may be connected to a first signal output end 534 of the controller 330, and a first end 544-1 of the 1-2nd y-conductive line 544 may be connected to a second signal output end 535 of the controller 330, and a first end 545-1 of the 1-3rd y-conductive line 545 may be connected to a third signal output end 536 of the controller 330. A second end 543-2 of the 1-1st y-conductive line 543 may be connected to a first end 553-1 of the 2-1st y-conductive line 553, and a second end 544-2 of the 1-2nd y-conductive line 544 may be connected to a first end 554-1 of the 2-2nd y-conductive line 554, and a second end 545-2 of the 1-3rd y-conductive line 545 may be connected to a first end 555-1 of the 2-3rd y-conductive line 555. A second end 553-2 of the 2-1st y-conductive line 553 and a second end 554-2 of the 2-2nd y-conductive line 554 or a second end 555-2 of the 2-3rd y-conductive line 555 may be connected to a reference line 539 extending from the reference end 333 of the controller 330 into the second digitizer 340. For example, the controller 330, the 1-1st y-conductive line 543, and the 2-1st y-conductive line 553 may form a closed loop, and the controller 330, the 1-2nd y-conductive line 544, and the 2-2nd y-conductive line 554 may form a closed loop, and the controller 330, the 1-3rd y-conductive line 545, and 2-3rd y-conductive line 555 may form a closed loop.

According to various embodiments, a magnetic field generated by a stylus pen may generate an induced current in the plurality of first y-conductive lines 543, 544, and 545 and/or plurality of second y-conductive lines 553, 554, and 555. At this time, since the 1-1st y-conductive line 543 and the 2-1st y-conductive line 553 are connected in series, an induced current corresponding to the sum of the magnetic flux passing through the cross-section of the 1-1st y-conductive line 543 and the magnetic flux passing through the cross-section of the 2-1st y-conductive line 553, among the magnetic fluxes caused by the pen signal, may flow through the 1-1st y-conductive line 543 and the 2-1st y-conductive line 553. The induced current flowing through the 1-1st y-conductive line 543 and the 2-1st y-conductive line 553 or the voltage induced at both ends of the 1-1st y-conductive line 543 and the 2-1st y-conductive line 553 may be transmitted, as a 1-2nd Output signal Y08, to a first signal output end 534 of the controller 330. In substantially the same manner, the induced current flowing through the 1-2nd y-conductive line 544 and the 2-2nd y-conductive line 554 or the voltage induced at both ends of the 1-2nd y-conductive line 544 and the 2-2nd y-conductive line 554, based on the magnetic field generated by the stylus pen, may be transferred, as an Output signal Y09, to a second signal output end 535 of the controller 330, and the induced current flowing through the 1-3rd y-conductive line 545 and the 2-3rd y-conductive line 555 or the voltage induced at both ends of the 1-3rd y-conductive line 545 and the 2-3rd y-conductive line 555, based on the magnetic field generated by a stylus pen, may be transferred, as an Output signal Y10, to a third signal output end 536 of the controller 330.

According to various embodiments, a first end 541-1 of the 3-1st y-conductive line 541 may be connected to a fourth signal output end 532 of the controller 330, a first end 542-1 of the 3-2nd y-conductive line 542 may be connected to a fifth signal output end 533 of the controller 330, a second end 541-2 of the 3-1st y-conductive line 541 may be connected to the reference end 333 of the controller 330, and a second end 542-2 of the 3-2nd y-conductive line 542 may be connected to the reference end 333 of the controller 330. A magnetic field generated by a stylus pen may generate an induced current in the plurality of third y-conductive lines 541 and 542. The induced current flowing through the 3-1st y-conductive line 541 or the voltage induced at both ends of the 3-1st y-conductive line 541 may be transmitted, as an Output signal Y00, to the fourth signal output end532 of the controller 330. The induced current flowing through the 3-2nd y-conductive line 542 or the voltage induced at both ends of the 3-2nd y-conductive line 542 may be transmitted, as an Output signal Y01, to a fifth signal output end 533 of the controller 330.

According to various embodiments, a first end 551-1 of the 4-1st y-conductive line 551 may be connected to a sixth signal output end 537 of the controller 330, a first end 552-1 of the 4-2nd y-conductive line 552 may be connected to a seventh signal output end 538 of the controller 330, a second end 551-1 of the 4-1st y-conductive line 551 may be connected to the reference line 539 extending from the reference end 333 of the controller 330 into the second digitizer 340, and a second end 552-2 of the 4-2nd y-conductive line 552 may be connected to the reference line 539 extending from the reference end 333 of the controller 330 into the second digitizer 340. A magnetic field generated by a stylus pen may generate an induced current in the plurality of fourth y-conductive lines 551 and 552. The induced current flowing through the 4-1st y-conductive line 551 or the voltage induced at both ends of the 4-1st y-conductive line 551 may be transferred, as an Output signal Y17, to the sixth signal output end 537 of the controller 330. The induced current flowing in the 4-2nd y-conductive line 552 or the voltage induced at both ends of the 4-2nd y-conductive line 552 may be transferred, as an Output signal Y18, to the seventh signal output end 538 of the controller 330.

According to various embodiments, the controller 330 may identify the 370x-directional coordinate of a stylus pen, based on Output signals Y08A to Y10A obtained through the plurality of signal output ends 534, 535, and 536, Output signals Y00 and Y01 obtained through the signal output ends 532 and 533, Output signals Y17 and Y18 obtained through the signal output ends 537 and 538, and Output signals Y02 to Y07 and Y11 to Y16 obtained through other output ends that are not shown in FIG. 5.

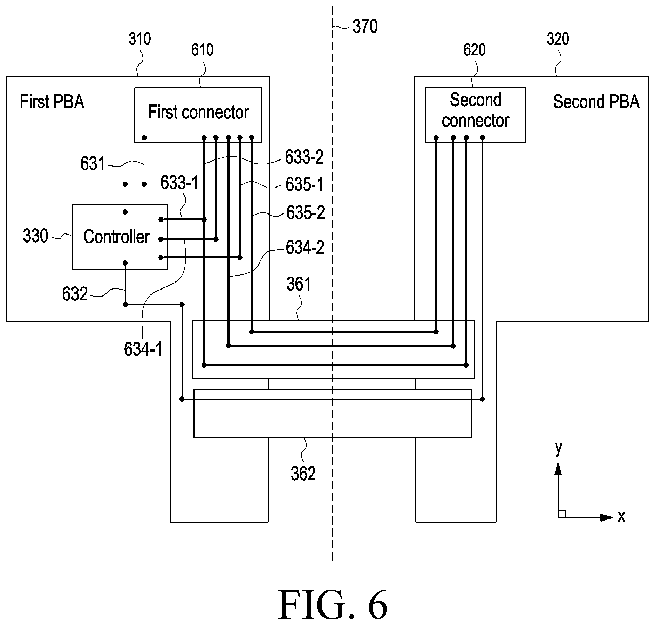

FIG. 6 illustrates disposition of conductive wires connecting digitizers and a controller in a foldable electronic device according to various embodiments. Although the foldable electronic device shown in FIG. 6 is illustrated by omitting some elements of the foldable electronic device 300 in FIG. 3, it may be substantially the same as the foldable electronic device 300 shown in FIG. 3.

According to various embodiments, a first connector 610 and the controller 330 may be positioned on the first PBA 310. According to various embodiments, the first connector 610 may be electrically connected to the first digitizer 340. According to various embodiments, a second connector 620 may be positioned on the second PBA 320. According to various embodiments, the second connector 620 may be electrically connected to the second digitizer 350. According to various embodiments, the y-directional positions of the first connector 610 and the second connector 620 may be substantially the same.

According to various embodiments, a conductive wire 631 may connect the controller 330 and the first connector 610. According to various embodiments, the conductive wire 631 may be connected to a plurality of signal output ends (e.g., the plurality of signal output ends 532 and 533 in FIG. 5 or the plurality of signal output ends 334 in FIG. 3) of the controller 330. According to various embodiments, the conductive wire 631 may be electrically connected to a first end (e.g., the first end 541-1 of the 3-1st y-conductive line 541 or the first end 542-1 of the 3-2nd y-conductive line 542 in FIG. 5) of a plurality of third y-conductive lines (e.g., the plurality of third y-conductive lines 541 and 542 in FIG. 5) included in the first digitizer 340 through the first connector 610. Output signals from the plurality of third y-conductive lines (e.g., the plurality of third y-conductive lines 541 and 542 in FIG. 5) may be transmitted to the plurality of signal output ends (e.g., the plurality of signal output ends 532 and 533 in FIG. 5 or the plurality of signal output ends 334 in FIG. 3) of the controller 330 through the conductive wire 631.

According to various embodiments, a conductive wire 632 may connect the controller 330 and the second connector 620. According to various embodiments, the conductive wire 632 may be connected to a plurality of signal output ends (e.g., the plurality of signal output ends 537 and 538 in FIG. 5 or the plurality of signal output ends 336 in FIG. 3) of the controller 330. According to various embodiments, the conductive wire 632 may be electrically connected to a first end (e.g., the first end 551-1 of the 4-1st y-conductive line 551 or the first end 552-1 of the 4-2nd y-conductive line 545 in FIG. 5) of a plurality of fourth y-conductive lines (e.g., the plurality of fourth y-conductive lines 551 and 552 in FIG. 5) included in the second digitizer 350 through the second connector 620. Output signals from the plurality of fourth y-conductive lines (e.g., the plurality of fourth y-conductive lines 551 and 552 in FIG. 5) may be transmitted to the plurality of signal output ends (e.g., the plurality of signal output ends 537 and 538 in FIG. 5 or the plurality of signal output ends 336 in FIG. 3) of the controller 330 through the conductive wire 632.

According to various embodiments, a conductive wire 633-1 may connect a conductive wire 633-2 and the controller 330. According to various embodiments, the conductive wire 633-1 may be electrically connected to a reference end (e.g., the reference end 331 in FIG. 4 and/or the reference end 333 in FIG. 5) of the controller 330 through the first connector 610. According to various embodiments, the conductive wire 633-2 may connect the first connector 610 and the second connector 620. The conductive wire 633-2 may be connected to a reference line (e.g., the reference line 434 in FIG. 4 and/or the reference line 539 in FIG. 5) through the second connector 620. The conductive wire 633-2 may be electrically connected to the second ends 541-2 and 542-2 of the plurality of third y-conductive lines 541 and 542 through the first connector 610.

According to various embodiments, a conductive wire 634-1 may connect the controller 330 and the first connector 610. According to various embodiments, the conductive wire 634-1 may be connected to a plurality of signal output ends (e.g., the plurality of signal output ends 432 and 433 in FIG. 4) of the controller 330. According to various embodiments, the conductive wire 634-1 may be electrically connected to a first end (e.g., the first end 441-1 of the 1-1st x-conductive line 441 or the first end 442-1 of the 1-2nd x-conductive line 442in FIG. 4) of a plurality of first x-conductive lines (e.g., the first x-conductive lines 441 and 442 in FIG. 4) included in the first digitizer 340 through the first connector 610.

According to various embodiments, a conductive wire 634-2 may connect the first connector 610 and the second connector 620. According to various embodiments, the conductive wire 634-2 may be electrically connected to a second end (e.g., the second end 441-2 of the 1-1st x-conductive line 441 or the second end 442-2 of the 1-2nd x-conductive line 442 in FIG. 4) of a plurality of first x-conductive lines (e.g., the first x-conductive lines 441 and 442 in FIG. 4) included in the first digitizer 340 through the first connector 610. According to various embodiments, the conductive wire 634-2 may be electrically connected to a first end (e.g., the first end 451-1 of the 2-1st x-conductive line 451 or the first end 452-1 of the 2-2nd x-conductive line 452) of a plurality of second x-conductive lines (e.g., the plurality of second x-conductive lines 451 and 452 in FIG. 4) included in the second digitizer 350 through the second connector 620.

According to various embodiments, a conductive wire 635-1 may connect the controller 330 and the first connector 610. According to various embodiments, the conductive wire 635-1 may be connected to a plurality of signal output ends (e.g., the plurality of signal output ends 534, 535, and 536 in FIG. 5) of the controller 330. According to various embodiments, the conductive wire 635-1 may be electrically connected to a first end (e.g., the first end 543-1 of the 1-1st y-conductive line 543, the first end 544-1 of the 1-2nd y-conductive line 544, or the first end 545-1 of the 1-3rd y-conductive line 545 in FIG. 5) of a plurality of first y-conductive lines (e.g., the plurality of the first y-conductive lines 543, 544, and 545 in FIG. 5) included in the first digitizer 340 through the first connector 610.

According to various embodiments, a conductive wire 635-2 may connect the first connector 610 and the second connector 620. According to various embodiments, the conductive wire 635-2 may be electrically connected to a second end (e.g., second end 543-2 of the 1-1st y-conductive line 543, the second end 544-2 of the 1-2nd y-conductive line 544, or the second end 545-2 of the 1-3rd y-conductive line 545 in FIG. 5) of a plurality of first y-conductive lines (e.g., the plurality of first y-conductive lines 543, 544, and 545 in FIG. 5) included in the first digitizer 340 through the first connector 610. According to various embodiments, the conductive wire 634-2 may be electrically connected to a first end (e.g., the first end 553-1 of the 2-1st y-conductive line 553, the first end 554-1 of the 2-2nd y-conductive line 554, or the first end 555-1 of the 2-3rd y-conductive line 555 in FIG. 5) of a plurality of second y-conductive lines (e.g., the plurality of the second y-conductive line 553, 554, and 555 in FIG. 5) included in the second digitizer 350 through the second connector 620.

According to various embodiments, the length of the conductive wire 632 may be greater than that of the conductive wire 631. According to various embodiments, the thickness of the conductive wire 632 may be greater than that of the conductive wire 631. According to various embodiments, the thicknesses of the conductive wire 631 and/or the conductive wire 632 may be configured such that the resistance of the conductive wire 632 is similar to that of the conductive wire 632.

According to various embodiments, the sum of the length of the conductive wire 633-1 and the length of the conductive wire 633-2, the sum of the length of the conductive wire 634-1 and the length of the conductive wire 634-2, and the sum of the length of the conductive wire 635-1 and the length of the conductive wire 635-2 may be greater than the length of the conductive wire 632. According to various embodiments, the thicknesses of the conductive wire 633-1, the conductive wire 633-2, the conductive wire 634-1, the conductive wire 634-2, the conductive wire 635-1, and the conductive wire 635-2 may be greater than the conductive wire 632. According to various embodiments, the thicknesses of the conductive wire 633-1, the conductive wire 633-2, and the conductive wire 632 may be configured such that the resistances of the conductive wire 633-1 and the conductive wire 633-2are similar to the resistance of the conductive wire 632. According to various embodiments, the thicknesses of the conductive wire 634-1, the conductive wire 634-2, and the conductive wire 632 may be configured such that the resistances of the conductive wire 634-1 and the conductive wire 634-2are similar to the resistance of the conductive wire 632. According to various embodiments, the thicknesses of the conductive wire 635-1, the conductive wire 635-2, and the conductive wire 632 may be configured such that the resistances of the conductive wire 635-1 and the conductive wire 635-2 are similar to the resistance of the conductive wire 632.

According to various embodiments, at least portions of the conductive wire 633-2, the conductive wire 634-2, and the conductive wire 635-2 may be positioned on the first C2C FPCB 361 relatively close to the first connector 610 and the second connector 620. According to various embodiments, at least a portion of the conductive wire 632 may be positioned on the second C2C FPCB 362 that is positioned relatively far from the first connector 610 and the second connector 620. For example, at least portions of the relatively long conductive wires, such as the conductive wire 633-2, the conductive wire 634-2, or the conductive wire 635-2, may be disposed on the C2C FPCB (e.g., the first C2C FPCB 361) relatively close to the first connector 610 and the second connector 620, and at least portions of the relatively short conductive wires, such as the conductive wire 632, may be disposed on the C2C FPCB (e.g., the second C2C FPCB 362) relatively far from the first connector 610 and the second connector 620. For example, the conductive wires may be disposed such that the lengths of the conductive wires are as similar as possible.

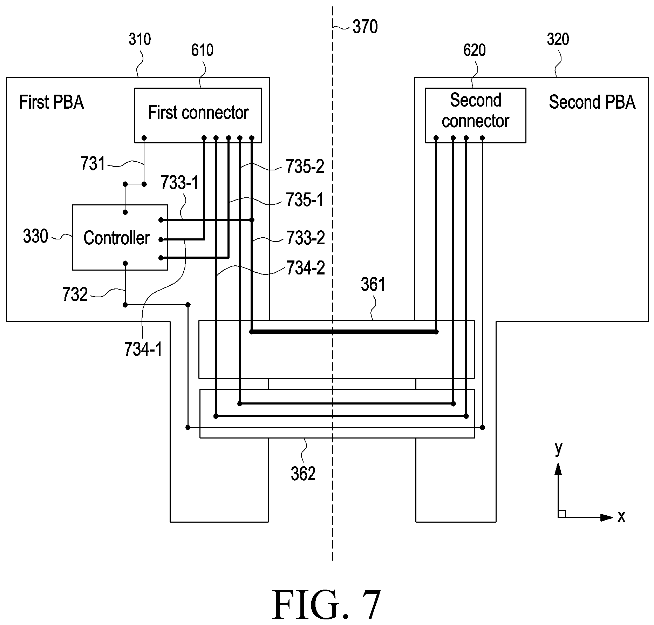

FIG. 7 illustrates disposition of conductive wires connecting digitizers and a controller in a foldable electronic device according to various embodiments. Although the foldable electronic device shown in FIG. 7 is illustrated by omitting some elements of the foldable electronic device 300 in FIG. 3, it may be substantially the same as the foldable electronic device 300 shown in FIG. 3. The details described above with reference to the conductive wire 631, the conductive wire 632, the conductive wire 633-1, the conductive wire 633-2, the conductive wire 634-1, the conductive wire 634-2, the conductive wire 635-1, and the conductive wire 635-2 in FIG. 6 may be applied in the same manner to a connection relationship between the conductive wire 731, the conductive wire 732, the conductive wire 733-1, the conductive wire 733-2, the conductive wire 734-1, the conductive wire 734-2, the conductive wire 735-1, and the conductive wire 735-2, and the controller 330, the first connector 610, and the second connector 620.

According to various embodiments, the thicknesses of the conductive wire 733-1 and the conductive wire 733-2 may be greater than the thicknesses of the conductive wire 731, the conductive wire 732, the conductive wire 733-1, the conductive wire 733-2, the conductive wire 734-1, and the conductive wire 734-1. Since the conductive wire 733-1 and the conductive wire733-2 are thick, the resistance of all the conductive wires may be reduced.

According to various embodiments, at least a portion of the conductive wire 733-2 may be positioned on the first C2C FPCB 361 relatively close to the first connector 610 and the second connector 620. According to various embodiments, at least portions of the conductive wire 732, the conductive wire 734-2, and the conductive wire 735-2 may be positioned on the second C2C FPCB 362 that is positioned relatively far from the first connector 610 and the second connector 620.

According to various embodiments, the thicknesses of the conductive wire 732, the conductive wire 734-1, the conductive wire 734-2, the conductive wire 735-1, and the conductive wire 735-2 may be configured in consideration of the length of a closed loop formed by the conductive wire 732, the controller 330, and the second connector 620, the length of a closed loop formed by the conductive wire 734-1, the conductive wire 734-2, the controller 330, the first connector 610, and the second connector 620, and the length of a closed loop formed by the conductive wire 735-1, the conductive wire 735-2, the controller 330, the first connector 610 and the second connector 620. According to an embodiment, as the length of the formed closed loop increases, the thickness of the related conductive wire may increase. For example, the length of a closed loop formed by the conductive wire 735-1, the conductive wire 735-2, the controller 330, the first connector 610, and the second connector 620 may be greater than the length of a closed loop formed by the conductive wire 732, the controller 330, and the second connector 620. According to various embodiments, the thicknesses of the conductive wire 735-1 and the conductive wire 735-2 may be greater than that of the conductive wire 732.

According to various embodiments, the length of the conductive wire 732 may be greater than that of the conductive wire 731. According to various embodiments, the sum of the lengths of the conductive wire 734-1 and the conductive wire 734-2 may be greater than the length of the conductive wire 731. According to various embodiments, the sum of the lengths of the conductive wire 735-1 and the conductive wire 735-2 may be greater than the length of the conductive wire 731. According to various embodiments, the thicknesses of the conductive wire 732, the conductive wire 734-1, the conductive wire 734-2, the conductive wire 735-1, and the conductive wire 735-2 may be greater than the thickness of the conductive wire 731.

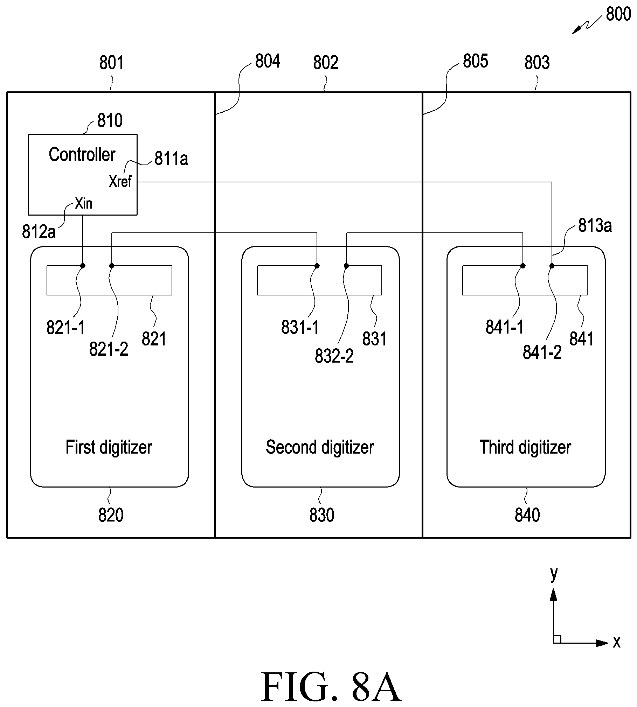

FIG. 8A illustrates disposition of digitizers and conductive lines included in the digitizers inside a foldable electronic device according to various embodiments. According to various embodiments, a foldable electronic device 800 (e.g., the electronic device 101) may include a controller 810, a first digitizer 820, a second digitizer 830, and a third digitizer 840.

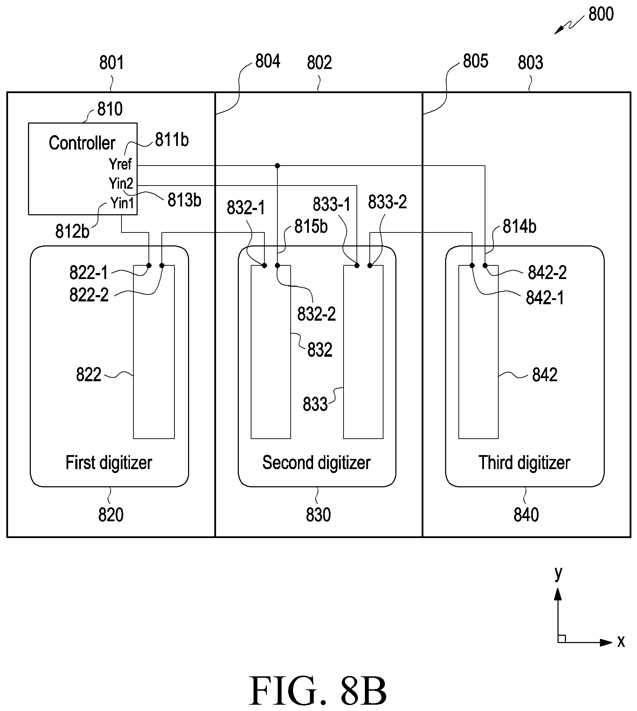

According to various embodiments, the foldable electronic device 800 may include a plurality of housings (e.g., a first housing 801, a second housing 802, and/or a third housing 803), and the line 804 may indicate a central axis about which the first housing 801 and the second housing 802 rotate, and the line 805 may indicate a central axis about which the second housing 802 and the third housing 803 rotate. The foldable electronic device 800 is illustrated in FIGS. 8A and 8B such that the line 804 and line 805 are parallel to the y-axis in order to explain directions of elements of the foldable electronic device 800. According to various embodiments, the controller 810 and the first digitizer 820 may be positioned in the first housing 801 of the foldable electronic device 800, and the second digitizer 830 may be positioned in the second housing 802 of the foldable electronic device 800, and the third digitizer 840 may be positioned in the third housing 803 of the foldable electronic device 800.

Although the foldable electronic device 800 is illustrated in FIG. 8A by omitting some elements therefrom, according to various embodiments, the foldable electronic device 800 may include PBAs inside the first housing 801, the second housing 802, and/or the third housing 803 and FPCBs disposed between the PBAs and the digitizers. According to various embodiments, the foldable electronic device 800 may include two C2C FPCBs (e.g., the first C2C FPCB 361 or the second C2C FPCB 362) provided between the first housing 801 and the second housing 802, and two C2C FPCBs (e.g., the first C2C FPCB 361 or the second C2C FPCB 362) provided between the second housing 802 and the third housing 803.

Referring to FIG. 8A, according to various embodiments, the first digitizer 820 may include a first conductive line 821 to identify the y-directional coordinate of a stylus pen. According to various embodiments, the second digitizer 830 may include a second conductive line 831 to identify the y-directional coordinate of a line 804 stylus pen. According to various embodiments, the third digitizer 840 may include a third conductive line 841 for identifying the y-directional coordinate of a stylus pen.

According to various embodiments, a first end 821-1 of the first conductive line 821 may be connected to a signal output end 812a of the controller 810, and a second end 821-1 of the first conductive line 821 2 may be connected to a first end 831-1 of the second conductive line 831. According to various embodiments, a second end 831-2 of the second conductive line 831 may be connected to a first end 841-1 of the third conductive line 841. According to various embodiments, a second end 841-2 of the third conductive line 841 may be connected to a reference line 813a extending from a reference end 811a of the controller 810 into the third digitizer 840.

Comparing FIG. 8A with FIG. 4, it can be seen that substantially the same principle as that in FIG. 4 may also be applied to the case where there are three or more housings. For example, the number of housings capable of being provided in a foldable electronic device according to various embodiments of the disclosure is not limited, and if a foldable electronic device has a plurality of housings, a plurality of conductive lines included in a plurality of first digitizers included in a plurality of first housings among the housings may form a closed loop with the controller. A conductive line, among the plurality of conductive lines forming a closed loop, included in a digitizer farthest from the controller, among the plurality of first digitizers, may be connected to a reference end of the controller.

FIG. 8B illustrates disposition of digitizers and conductive lines included in the digitizers inside a foldable electronic device according to various embodiments. According to various embodiments, the foldable electronic device shown in FIG. 8B may be the same as the foldable electronic device 800 shown in FIG. 8A.

Referring to FIG. 8B, according to various embodiments, the first digitizer 820 may include a first conductive line 822 for identifying the x-directional coordinate of a stylus pen. According to various embodiments, the second digitizer 830 may include a second conductive line 832 and a third conductive line 833 for identifying the x-directional coordinate of a stylus pen. According to various embodiments, the third digitizer 840 may include a fourth conductive line 842 for identifying the x-directional coordinate of a stylus pen.

According to various embodiments, a first end 822-1 of the first conductive line 822 may be connected to a signal output end 812b of the controller 810, and a second end 822-1 of the first conductive line 822 may be connected to a first end 832-1 of the second conductive line 832. According to various embodiments, a second end 832-2 of the second conductive line 832 may be connected to a reference line 815b extending from a reference end 811b of the controller 810 into the second digitizer 830.

According to various embodiments, a first end 833-1 of the third conductive line 833 may be connected to a signal output end 813b of the controller 810, and a second end 833-2 of the third conductive line 833 may be connected to a first end 842-1 of the fourth conductive line 842. According to various embodiments, a second end 842-2 of the fourth conductive line 842 may be connected to a reference line 814b extending from the reference end 811b of the controller 810 into the third digitizer 840.

Comparing FIG. 8B with FIG. 5, it can be seen that substantially the same principle as that in FIG. 5 may also be applied to the case where there are three or more housings. For example, the number of housings capable of being provided in a foldable electronic device according to various embodiments of the disclosure is not limited, and if a foldable electronic device has a plurality of housings, two conductive lines included in two digitizers included in two adjacent housings among the housings may form a closed loop with the controller. A conductive line included in a digitizer farther from the controller, among the two conductive lines forming a closed loop, may be connected to a reference end of the controller.

According to various embodiments, substantially the same principle as that in FIG. 6 may also be applied to the case where there are three or more housings. For example, a short conductive wire may be designed to be thin, and a long conductive wire may be designed to be thick. As another example, a conductive wire connecting the controller and one digitizer may be positioned on a C2C FPCB at a relatively far distance from the digitizer, and a conductive wire connecting the controller and a plurality of digitizers may be positioned on a C2C FPCB relatively close to the digitizer.

According to various embodiments, substantially the same principle as that in FIG. 7 may also be applied to the case where there are three or more housings. According to various embodiments, a conductive wire extending from the reference end of the controller to a digitizer positioned in a housing not including the controller may be designed to have a greater thickness than other conductive wires. According to various embodiments, a conductive wire extending from the reference end of the controller to a digitizer positioned in a housing not including the controller may be positioned on a C2C FPCB relatively close to the digitizer.

An electronic device 300 according to various embodiments may include a first housing 210a, a second housing 220a connected to the first housing 210a to be rotatable about a rotation axis 370, a first digitizer 340 positioned in the first housing 210a and including a plurality of first conductive lines 341 and 343, a second digitizer 350 positioned in the second housing 220a and including a plurality of second conductive lines 351 and 353, and a controller 330 positioned in the first housing 210a, wherein first ends of the plurality of first conductive lines 341 and 343 may be respectively connected to a plurality of signal output ends 332 and 335 of the controller 330, wherein second ends of the plurality of first conductive lines 341 and 343 may be respectively connected to first ends of the plurality of second conductive lines 351 and 353, and wherein second ends of the plurality of second conductive lines 351 and 353 may be respectively connected to reference lines 434 and 539 extending from reference ends 331 and 333 of the controller 330 into the second digitizer 350.

According to various embodiments, the first digitizer 340 may further include a plurality of third conductive lines 342, wherein first ends of the plurality of third conductive lines 342 may be respectively connected to a plurality of signal output ends 334 of the controller 330, and wherein second ends of the plurality of third conductive lines 342 may be respectively connected to the reference ends 331 and 333 of the controller 330.

According to various embodiments, the second digitizer 350 may further include a plurality of fourth conductive lines 352, wherein first ends of the plurality of fourth conductive lines 352 may be respectively connected to a plurality of signal output ends 336 of the controller 330, and wherein second ends of the plurality of fourth conductive lines 352 may be respectively connected to the reference lines 434 and 539.

According to various embodiments, the controller 330 may be configured to obtain, based on pen signals from a stylus pen, a plurality of output signals through the plurality of signal output ends 332, 334, 335, and 336 connected to the first ends of the plurality of first conductive lines 341 and 343, the plurality of third conductive lines 342, and the plurality of fourth conductive lines 352, and identify a position of the stylus pen, based on the plurality of output signals.

According to various embodiments, the plurality of first conductive lines 341 and 343 may include a plurality of first x-conductive lines configured to generate output signals for identifying a coordinate of the stylus pen in a direction of the rotation axis 370 and a plurality of first y-conductive lines configured to generate output signals for identifying a coordinate of the stylus pen in a direction perpendicular to the rotation axis 370.

According to various embodiments, lengths of the plurality of first x-conductive lines in the direction perpendicular to the rotation axis 370 may be greater than lengths of the plurality of first y-conductive lines in the rotation axis 370 direction, and lengths of the plurality of first y-conductive lines in the direction perpendicular to the rotation axis 370 may be less than the lengths of the plurality of first y-conductive lines in the rotation axis 370 direction.

According to various embodiments, the electronic device 300 may further include a first connector 610 positioned in the first housing 210a and electrically connected to the first digitizer 340, a second connector 620 positioned in the second housing 220a and electrically connected to the second digitizer 350, a first conductive wire extending from the reference end of the controller 330 to the second connector 620 and electrically connected to the reference line through the second connector 620, a second conductive wire extending from the first connector 610 to the second connector 620, electrically connected to the second ends of the plurality of first conductive lines through the first connector 610, and electrically connected to the first ends of the plurality of second conductive lines through the second connector 620, and a third conductive wire extending from the plurality of signal output ends of the controller 330 to the first connector 610 and extending to the first ends of the plurality of third conductive lines through the first connector 610, wherein a thickness of the first conductive wire and a thickness of the second conductive wire may be greater than a thickness of the third conductive wire.

According to various embodiments, the electronic device 300 may further include a fourth conductive wire extending from the plurality of signal output ends of the controller 330 to the second connector 620 and electrically connected to the first ends of the plurality of fourth conductive lines through the second connector 620, wherein the thickness of the first conductive wire and the thickness of the second conductive wire may be greater than a thickness of the fourth conductive wire.

According to various embodiments, the thickness of the fourth conductive wire may be greater than the thickness of the third conductive wire.

According to various embodiments, the electronic device 300 may include a first PBA positioned in the first housing 210a, a second PBA positioned in the second housing 220a, and a first C2C FPCB and a second C2C FPCB positioned between the first PBA and the second PBA, wherein the first digitizer 340 and the second digitizer 350 have the same position in the rotation axis 370 direction, and wherein a distance from the second C2C FPCB to the first digitizer 340 and the second digitizer 350 in the rotation axis 370 direction may be less than a distance from the first C2C FPCB to the first digitizer 340 and the second digitizer 350 in the rotation axis 370 direction.

According to various embodiments, at least a portion of the fourth conductive wire, which extends from the plurality of signal output ends 336 of the controller 330 to the first ends of the plurality of fourth conductive lines 352, may be positioned on the first C2C FPCB, and at least a portion of the first conductive wire, which extends from the reference ends 331 and 333 of the controller 330 to the reference lines 434 and 539, and at least a portion of the second conductive wire, which extends from the second ends of the plurality of first conductive lines 341 and 343 to the first ends of the plurality of second conductive lines 351 and 353, may be positioned on the second C2C FPCB.

According to various embodiments, the thickness of the first conductive wire and the thickness of the second conductive wire may be greater than the thickness of the fourth conductive wire.

According to various embodiments, at least a portion of the second conductive wire, which extends from the second ends of the plurality of first conductive lines 341 and 343 to the first ends of the plurality of second conductive lines 351 and 353, and at least a portion of the fourth conductive wire, which extends from the plurality of signal output ends 336 of the controller 330 to the first ends of the plurality of fourth conductive lines 352, may be positioned on the first C2C FPCB, and at least a portion of the first conductive wire, which extends from the reference ends 331 and 333 of the controller 330 to the reference lines 434 and 539, may be positioned on the second C2C FPCB.

According to various embodiments, the thickness of the first conductive wire may be greater than the thicknesses of the fourth conductive wire and the second conductive wire.

An electronic device 800 according to various embodiments may include a plurality of housings 801, 802, and 803 connected to be rotatable about one or more rotation axes, a plurality of digitizers 820, 830, and 840 respectively positioned in the plurality of housings 801, 802, and 803, and a controller 810 positioned in one of the plurality of housings 801, 802, and 803, wherein a first digitizer among the plurality of digitizers 820, 830, and 840 may include first conductive lines 822 and 833, wherein a second digitizer among the plurality of digitizers 820, 830, and 840 may include second conductive lines 832 and 842, wherein first ends 822-1 and 833-1 of the first conductive lines 822 and 833 may be connected to first signal output ends 812b and 813b of the controller 810, wherein second ends 822-2 and 833-2 of the first conductive lines 822 and 833 may be connected to first ends 832-1 and 842-1 of the second conductive lines 832 and 842, wherein second ends 832-2 and 842-2 of the second conductive lines 832 and 842 may be connected to a first reference line extending from a first reference end 811b of the controller 810 into the second digitizer, and wherein a distance between the first digitizer and the controller 810 may be less than a distance between the second digitizer and the controller 810.

According to various embodiments, the first conductive lines 822 and 833 and the second conductive lines 832 and 842 may be configured to generate a first output signal, based on pen signals from a stylus pen, and the controller 810 may be configured to identify the position of the stylus pen, based at least in part on the first output signal input through the first signal output end 812b or 813b.

According to various embodiments, a thickness of a fifth conductive wire, which extends from the first ends 822-1 and 833-1 of the first conductive lines 822 and 833 to the first signal output ends 812b and 813b of the controller 810, may be less than a thickness of a sixth conductive wire extending from the first reference end 811b of the controller 810 to the first reference line.

According to various embodiments, a plurality of third digitizers 820, 830, and 840 among the plurality of digitizers 820, 830, and 840 may respectively include third conductive lines 821, 831, and 841, the third conductive lines 821, 831, and 841 of the plurality of third digitizers 820, 830, and 840 may be sequentially connected to each other, a third conductive line 841 included in a fourth digitizer 840 farthest from the controller 810, among the plurality of third digitizers 820, 830, and 840, may be connected to a second reference line 813a extending from the second reference end 811a of the controller 810 into the fourth digitizer 840, and a third conductive line 821 included in a fifth digitizer 820 closest to the controller 810, among the plurality of third digitizers 820, 830, and 840, may be connected to the second signal output end 812a of the controller 810.

According to various embodiments, the plurality of third conductive lines 821, 831, and 841 may be configured to generate a second output signal, based on a pen signal from a stylus pen, and the controller 810 may be configured to identify the position of the stylus pen, based at least in part on the second output signal input through the second signal output end 812a.

According to various embodiments, a thickness of a seventh conductive wire extending from the third conductive line 821 included in the fifth digitizer 820 to the second signal output end 812a of the controller 810 may be less than a thickness of an eighth conductive wire extending from the second reference end 811a of the controller 810 to the second reference line 813a.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 340) including one or more instructions that are stored in a storage medium (e.g., internal memory 136 or external memory 138) that is readable by a machine (e.g., the electronic device 301). For example, a processor (e.g., the processor 120) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (800) comprising:
a first housing (801);
a second housing (802) connected to the first housing to be rotatable about a rotation axis;
a first digitizer (820) positioned in the first housing and comprising a plurality of first conductive lines (822);
a second digitizer (830) positioned in the second housing and comprising a plurality of second conductive lines (832); and
a controller (810) positioned in the first housing,
wherein first ends (822-1) of the plurality of first conductive lines are respectively connected to a plurality of first signal output ends (812b) of the controller, second ends ( 822-2) of the plurality of first conductive lines are respectively connected to first ends of the plurality of second conductive lines, and
second ends (832-2) of the plurality of second conductive lines are respectively connected to reference lines extending from reference ends (811b) of the controller into the second digitizer.

2. The electronic device of claim 1, wherein the first digitizer further comprises a plurality of third conductive lines,
first ends of the plurality of third conductive lines are respectively connected to a plurality of second signal output ends of the controller, and
second ends of the plurality of third conductive lines are respectively connected to the reference ends of the controller.

3. The electronic device of claim 2, wherein the second digitizer further comprises a plurality of fourth conductive lines,
first ends of the plurality of fourth conductive lines are respectively connected to a plurality of third signal output ends of the controller, and
second ends of the plurality of fourth conductive lines are respectively connected to the reference lines.

4. The electronic device of claim 3, wherein the controller is configured to:
obtain, based on pen signals from a stylus pen, a plurality of output signals through the plurality of first signal output ends of the controller connected to the first ends of the plurality of first conductive lines, the plurality of second signal output ends of the controller connected to the first ends of the plurality of third conductive lines, and the plurality of third signal output ends of the controller connected to the first ends of the plurality of fourth conductive lines, and
identify a position of the stylus pen, based on the plurality of output signals.

5. The electronic device of claim 4, wherein the plurality of first conductive lines comprises a plurality of first x-conductive lines configured to generate output signals for identifying a coordinate of the stylus pen in a direction of the rotation axis, and
a plurality of first y-conductive lines configured to generate output signals for identifying a coordinate of the stylus pen in a direction perpendicular to the rotation axis.

6. The electronic device of claim 5, wherein lengths of the plurality of first x-conductive lines in the direction perpendicular to the rotation axis are greater than lengths of the plurality of first y-conductive lines in the direction of the rotation axis, and
lengths of the plurality of first y-conductive lines in the direction perpendicular to the rotation axis are less than the lengths of the plurality of first y-conductive lines in the direction of the rotation axis.

7. The electronic device of claim 4, further comprising:
a first connector positioned in the first housing and electrically connected to the first digitizer;
a second connector positioned in the second housing and electrically connected to the second digitizer;
a plurality of first conductive wires extending from the reference ends of the controller to the second connector and electrically connected to the reference lines through the second connector;
a plurality of second conductive wires extending from the first connector to the second connector, electrically connected to the second ends of the plurality of first conductive lines through the first connector, and electrically connected to the first ends of the plurality of second conductive lines through the second connector; and
a plurality of third conductive wires extending from the plurality of second signal output ends of the controller to the first connector and extending to the first ends of the plurality of third conductive lines through the first connector,
wherein a thickness of the first conductive wires and a thickness of the second conductive wires are greater than a thickness of the third conductive wires.

8. The electronic device of claim 7, further comprising a plurality of fourth conductive wires extending from the plurality of third signal output ends of the controller to the second connector and electrically connected to the first ends of the plurality of fourth conductive lines through the second connector,
wherein the thickness of the plurality of first conductive wires and the thickness of the plurality of second conductive wires are greater than a thickness of the plurality of fourth conductive wires.

9. The electronic device of claim 8, wherein the thickness of the plurality of fourth conductive wires is greater than the thickness of the plurality of third conductive wires.

10. The electronic device of claim 9, further comprising:
a first PBA positioned in the first housing;
a second PBA positioned in the second housing; and
a first C2C FPCB and a second C2C FPCB positioned between the first PBA and the second PBA,
wherein a distance from the first connector to the second C2C FPCB is the same as a distance from the second connector to the second C2C FPCB, and
a distance from the second C2C FPCB to the first connector and the second connector in the rotation axis direction is greater than a distance from the first C2C FPCB to the first connector and the second connector in the rotation axis direction.

11. The electronic device of claim 10, wherein at least a portion of the plurality of fourth conductive wires is positioned on the first C2C FPCB, and
at least a portion of the plurality of first conductive wires and at least a portion of the plurality of second conductive wires are positioned on the second C2C FPCB.

12. The electronic device of claim 11, wherein the thickness of the plurality of first conductive wires and the thickness of the plurality of second conductive wires are greater than the thickness of the plurality of fourth conductive wires.

13. The electronic device of claim 10, wherein at least a portion of the plurality of second conductive wires and at least a portion of the plurality of fourth conductive wires are positioned on the first C2C FPCB, and
at least a portion of the plurality of first conductive wires is positioned on the second C2C FPCB.

14. The electronic device of claim 13, wherein the thickness of the plurality of first conductive wires is greater than the thicknesses of the plurality of fourth conductive wires and the plurality of second conductive wires.

15. The electronic device of claim 1, further comprising:
a third housing connected to the second housing to be rotatable about the rotation axis; and
a third digitizer positioned in the third housing and comprising a plurality of third conductive lines,
wherein the second digitizer positioned in the second housing further comprises a plurality of fourth conductive lines,
first ends of the plurality of fourth conductive lines are respectively connected to a plurality of third signal output ends of the controller,
second ends of the plurality of fourth conductive lines are respectively connected to first ends of the plurality of third conductive lines, and
second ends of the plurality of third conductive lines are respectively connected to the reference lines extending from the reference ends of the controller into the third digitizer.

## Patentansprüche

1. Elektronische Vorrichtung (800), umfassend:
ein erstes Gehäuse (801);
ein zweites Gehäuse (802), das mit dem ersten Gehäuse verbunden ist, um um eine Drehachse drehbar zu sein;
einen ersten Digitalisierer (820), der in dem ersten Gehäuse positioniert ist und mehrere erste leitfähige Leitungen (822) umfasst;
einen zweiten Digitalisierer (830), der in dem zweiten Gehäuse positioniert ist und mehrere zweite leitfähige Leitungen (832) umfasst; und
ein Steuergerät (810), das in dem ersten Gehäuse positioniert ist,
wobei erste Enden (822-1) der mehreren ersten leitfähigen Leitungen jeweils mit mehreren ersten Signalausgangsenden (812b) des Steuergeräts verbunden sind, zweite Enden (822-2) der mehreren ersten leitfähigen Leitungen jeweils mit ersten Enden der mehreren zweiten leitfähigen Leitungen verbunden sind und
zweite Enden (832-2) der mehreren zweiten leitfähigen Leitungen jeweils mit Referenzleitungen verbunden sind, die sich von Referenzenden (811b) des Steuergeräts in den zweiten Digitalisierer erstrecken.

2. Elektronische Vorrichtung nach Anspruch 1, wobei der erste Digitalisierer ferner mehrere dritte leitfähige Leitungen umfasst,
erste Enden der mehreren dritten leitfähigen Leitungen jeweils mit mehreren zweiten Signalausgangsenden des Steuergeräts verbunden sind und
zweite Enden der mehreren dritten leitfähigen Leitungen jeweils mit den Referenzenden des Steuergeräts verbunden sind.

3. Elektronische Vorrichtung nach Anspruch 2, wobei der zweite Digitalisierer ferner mehrere vierte leitfähige Leitungen umfasst,
erste Enden der mehreren vierten leitfähigen Leitungen jeweils mit mehreren dritten Signalausgangsenden des Steuergeräts verbunden sind und
zweite Enden der mehreren vierten leitfähigen Leitungen jeweils mit den Referenzleitungen verbunden sind.

4. Elektronische Vorrichtung nach Anspruch 3, wobei das Steuergerät ferner konfiguriert ist, um:
basierend auf Stiftsignalen von einem Eingabestift mehrere Ausgangssignale durch die mehreren ersten Signalausgangsenden des Steuergeräts zu erhalten, die mit den ersten Enden der mehreren ersten leitfähigen Leitungen verbunden sind, wobei die mehreren zweiten Signalausgangsenden des Steuergeräts mit den ersten Enden der mehreren dritten leitfähigen Leitungen verbunden sind und die mehreren dritten Signalausgangsenden des Steuergeräts mit den ersten Enden der mehreren vierten leitfähigen Leitungen verbunden sind, und
eine Position des Eingabestifts basierend auf den mehreren Ausgangssignalen zu identifizieren.

5. Elektronische Vorrichtung nach Anspruch 4, wobei die mehreren ersten leitfähigen Leitungen mehrere erste x-leitfähige Leitungen, die konfiguriert sind, um Ausgangssignale zum Identifizieren einer Koordinate des Eingabestiftes in einer Richtung der Drehachse zu erzeugen, und
mehrere erste y-leitfähige Leitungen, die konfiguriert sind, um Ausgangssignale zum Identifizieren einer Koordinate des Eingabestiftes in einer Richtung senkrecht zu der Drehachse zu erzeugen, umfassen.

6. Elektronische Vorrichtung nach Anspruch 5, wobei Längen der mehreren ersten x-leitfähigen Leitungen in der Richtung senkrecht zu der Drehachse größer als Längen der mehreren ersten y-leitfähigen Leitungen in der Richtung der Drehachse sind und
Längen der mehreren ersten y-leitfähigen Leitungen in der Richtung senkrecht zu der Drehachse kleiner als die Längen der mehreren ersten y-leitfähigen Leitungen in der Richtung der Drehachse sind.

7. Elektronische Vorrichtung nach Anspruch 4, ferner umfassend:
einen ersten Verbinder, der in dem ersten Gehäuse positioniert ist und elektrisch mit dem ersten Digitalisierer verbunden ist;
einen zweiten Verbinder, der in dem zweiten Gehäuse positioniert ist und elektrisch mit dem zweiten Digitalisierer verbunden ist;
mehrere erste leitfähige Drähte, die sich von den Referenzenden des Steuergeräts zu dem zweiten Verbinder erstrecken und durch den zweiten Verbinder elektrisch mit den Referenzleitungen verbunden sind;
mehrere zweite leitfähige Drähte, die sich von dem ersten Verbinder zu dem zweiten Verbinder erstrecken, durch den ersten Verbinder elektrisch mit den zweiten Enden der mehreren ersten leitfähigen Leitungen verbunden sind und durch den zweiten Verbinder elektrisch mit den ersten Enden der mehreren zweiten leitfähigen Leitungen verbunden sind; und
mehrere dritte leitfähige Drähte, die sich von den mehreren zweiten Signalausgangsenden des Steuergeräts zu dem ersten Verbinder erstrecken und sich durch den ersten Verbinder zu den ersten Enden der mehreren dritten leitfähigen Leitungen erstrecken,
wobei eine Dicke der ersten leitfähigen Drähte und eine Dicke der zweiten leitfähigen Drähte größer als eine Dicke der dritten leitfähigen Drähte sind.

8. Elektronische Vorrichtung nach Anspruch 7, ferner umfassend mehrere vierte leitfähige Drähte, die sich von den mehreren dritten Signalausgangsenden des Steuergeräts zu dem zweiten Verbinder erstrecken und durch den zweiten Verbinder elektrisch mit den ersten Enden der mehreren vierten leitfähigen Leitungen verbunden sind,
wobei die Dicke der mehreren ersten leitfähigen Drähte und die Dicke der mehreren zweiten leitfähigen Drähte größer als eine Dicke der mehreren vierten leitfähigen Drähte sind.

9. Elektronische Vorrichtung nach Anspruch 8, wobei die Dicke der mehreren vierten leitfähigen Drähte größer als die Dicke der mehreren dritten leitfähigen Drähte ist.

10. Elektronische Vorrichtung nach Anspruch 9, ferner umfassend:
eine erste PBA, die in dem ersten Gehäuse positioniert ist;
eine zweite PBA, die in dem zweiten Gehäuse positioniert ist; und
eine erste C2C-FPCB und eine zweite C2C-FPCB, die zwischen der ersten PBA und der zweiten PBA positioniert sind,
wobei ein Abstand von dem ersten Verbinder zu der zweiten C2C-FPCB gleich einem Abstand von dem zweiten Verbinder zu der zweiten C2C-FPCB ist, und
ein Abstand von der zweiten C2C-FPCB zu dem ersten Verbinder und dem zweiten Verbinder in der Drehachsenrichtung größer als ein Abstand von der ersten C2C-FPCB zu dem ersten Verbinder und dem zweiten Verbinder in der Drehachsenrichtung ist.

11. Elektronische Vorrichtung nach Anspruch 10, wobei mindestens ein Teil der mehreren vierten leitfähigen Drähte auf der ersten C2C-FPCB positioniert ist, und
mindestens ein Teil der mehreren ersten leitfähigen Drähte und mindestens ein Teil der mehreren zweiten leitfähigen Drähte auf der zweiten C2C-FPCB positioniert sind.

12. Elektronische Vorrichtung nach Anspruch 11, wobei die Dicke der mehreren ersten leitfähigen Drähte und die Dicke der mehreren zweiten leitfähigen Drähte größer als die Dicke der mehreren vierten leitfähigen Drähte sind.

13. Elektronische Vorrichtung nach Anspruch 10, wobei mindestens ein Teil der mehreren zweiten leitfähigen Drähte und mindestens ein Teil der mehreren vierten leitfähigen Drähte auf der ersten C2C-FPCB positioniert sind, und
mindestens ein Teil der mehreren ersten leitfähigen Drähte auf der zweiten C2C-FPCB positioniert ist.

14. Elektronische Vorrichtung nach Anspruch 13, wobei die Dicke der mehreren ersten leitfähigen Drähte größer als die Dicken der mehreren vierten leitfähigen Drähte und der mehreren zweiten leitfähigen Drähte ist.

15. Elektronische Vorrichtung nach Anspruch 1, ferner umfassend:
ein drittes Gehäuse, das mit dem zweiten Gehäuse verbunden ist, um um die Drehachse drehbar zu sein; und
einen dritten Digitalisierer, der in dem dritten Gehäuse positioniert ist und mehrere dritte leitfähige Leitungen umfasst,
wobei der zweite Digitalisierer, der in dem zweiten Gehäuse positioniert ist, ferner mehrere vierte leitfähige Leitungen umfasst,
erste Enden der mehreren vierten leitfähigen Leitungen jeweils mit mehreren dritten Signalausgangsenden des Steuergeräts verbunden sind,
zweite Enden der mehreren vierten leitfähigen Leitungen jeweils mit ersten Enden der mehreren dritten leitfähigen Leitungen verbunden sind und
zweite Enden der mehreren dritten leitfähigen Leitungen jeweils mit den Referenzleitungen verbunden sind, die sich von den Referenzenden des Steuergeräts in den dritten Digitalisierer erstrecken.

## Revendications

1. Dispositif électronique (800) comprenant :
un premier boîtier (801) ;
un deuxième boîtier (802) relié au premier boîtier de manière à pouvoir tourner autour d'un axe de rotation ;
un premier numériseur (820) positionné dans le premier boîtier et comprenant une pluralité de premières lignes conductrices (822) ;
un deuxième numériseur (830) positionné dans le deuxième boîtier et comprenant une pluralité de premières lignes conductrices (832) ; et
un dispositif de commande (810) positionné dans le premier boîtier,
lesdites premières extrémités (822-1) de la pluralité de premières lignes conductrices étant respectivement reliées à une pluralité de premières extrémités de sortie de signal (812b) du dispositif de commande, lesdites secondes extrémités (822-2) de la pluralité de premières lignes conductrices étant respectivement reliées aux premières extrémités de la pluralité de deuxièmes lignes conductrices, et
lesdites secondes extrémités (832-2) de la pluralité de deuxièmes lignes conductrices étant respectivement reliées à des lignes de référence s'étendant depuis les extrémités de référence (811b) du dispositif de commande dans le deuxième numériseur.

2. Dispositif électronique selon la revendication 1, ledit premier numériseur comprenant en outre une pluralité de troisièmes lignes conductrices,
lesdites premières extrémités de la pluralité de troisièmes lignes conductrices étant respectivement reliées à une pluralité de deuxièmes extrémités de sortie de signal du dispositif de commande, et
lesdites secondes extrémités de la pluralité de troisièmes lignes conductrices étant respectivement reliées aux extrémités de référence du dispositif de commande.

3. Dispositif électronique selon la revendication 2, ledit deuxième numériseur comprenant en outre une pluralité de quatrième lignes conductrices,
lesdites premières extrémités de la pluralité de quatrièmes lignes conductrices étant respectivement reliées à une pluralité de troisièmes extrémités de sortie de signal du dispositif de commande, et
lesdites secondes extrémités de la pluralité de quatrièmes lignes conductrices étant respectivement reliées aux lignes de référence.

4. Dispositif électronique selon la revendication 3, ledit dispositif de commande étant en outre conçu pour :
obtenir, sur la base de signaux de stylet provenant d'un stylet, une pluralité de signaux de sortie à travers la pluralité de premières extrémités de sortie de signal du dispositif de commande reliées aux premières extrémités de la pluralité de premières lignes conductrices, la pluralité de deuxièmes extrémités de sortie de signal du dispositif de commande étant reliées aux premières extrémités de la pluralité de troisièmes lignes conductrices, et la pluralité de troisièmes extrémités de sortie de signal du dispositif de commande étant reliées aux premières extrémités de la pluralité de quatrièmes lignes conductrices, et
identifier la position du stylet, sur la base de la pluralité de signaux de sortie.

5. Dispositif électronique selon la revendication 4, ladite pluralité de premières lignes conductrices comprenant une pluralité de premières lignes conductrices en x conçues pour générer des signaux de sortie destinés à identifier une coordonnée du stylet dans une direction de l'axe de rotation, et
une pluralité de premières lignes conductrices en y conçues pour générer des signaux de sortie destinés à identifier une coordonnée du stylet suivant une direction perpendiculaire à l'axe de rotation.

6. Dispositif électronique selon la revendication 5, lesdites longueurs de la pluralité de premières lignes conductrices en x suivant la direction perpendiculaire à l'axe de rotation étant supérieures aux longueurs de la pluralité de premières lignes conductrices en y suivant la direction de l'axe de rotation, et
lesdites longueurs de la pluralité de premières lignes conductrices en y suivant la direction perpendiculaire à l'axe de rotation étant inférieures aux longueurs de la pluralité de premières lignes conductrices en y suivant la direction de l'axe de rotation.

7. Dispositif électronique selon la revendication 4, comprenant en outre :
un premier connecteur positionné dans le premier boîtier et connecté électriquement au premier numériseur ;
un second connecteur positionné dans le deuxième boîtier et connecté électriquement au deuxième numériseur ;
une pluralité de premiers fils conducteurs s'étendant des extrémités de référence du dispositif de commande au second connecteur et connectés électriquement aux lignes de référence par l'intermédiaire du second connecteur ;
une pluralité de deuxièmes fils conducteurs s'étendant du premier connecteur au second connecteur, électriquement connectés aux secondes extrémités de la pluralité de premières lignes conductrices par l'intermédiaire du premier connecteur, et électriquement connectés aux premières extrémités de la pluralité de deuxièmes lignes conductrices par l'intermédiaire du second connecteur ; et
une pluralité de troisièmes fils conducteurs s'étendant de la pluralité de deuxièmes extrémités de sortie de signal du dispositif de commande au premier connecteur et s'étendant jusqu'aux premières extrémités de la pluralité de troisièmes lignes conductrices par l'intermédiaire du premier connecteur,
l'épaisseur des premiers fils conducteurs et l'épaisseur des deuxièmes fils conducteurs étant supérieures à l'épaisseur des troisièmes fils conducteurs.

8. Dispositif électronique selon la revendication 7, comprenant en outre une pluralité de quatrièmes fils conducteurs s'étendant de la pluralité de troisièmes extrémités de sortie de signal du dispositif de commande au second connecteur et connectés électriquement aux premières extrémités de la pluralité de quatrièmes lignes conductrices par l'intermédiaire du second connecteur,
ladite épaisseur de la pluralité de premiers fils conducteurs et ladite épaisseur de la pluralité de deuxièmes fils conducteurs étant supérieures à l'épaisseur de la pluralité de quatrièmes fils conducteurs.

9. Dispositif électronique selon la revendication 8, ladite épaisseur de la pluralité de quatrièmes fils conducteurs étant supérieure à l'épaisseur de la pluralité de troisièmes fils conducteurs.

10. Dispositif électronique selon la revendication 9, comprenant en outre :
une première PBA positionnée dans le premier boîtier ;
une seconde PBA positionnée dans le deuxième boîtier ; et
une première C2C FPCB et une seconde C2C FPCB positionnées entre la première PBA et la seconde PBA,
la distance du premier connecteur à la seconde C2C FPCB étant la même que la distance du second connecteur à la seconde C2C FPCB, et
la distance de la seconde C2C FPCB au premier connecteur et au second connecteur suivant la direction de l'axe de rotation étant supérieure à la distance de la première C2C FPCB au premier connecteur et au second connecteur suivant la direction de l'axe de rotation.

11. Dispositif électronique selon la revendication 10, au moins une partie de la pluralité de quatrièmes fils conducteurs étant positionnée sur la première C2C FPCB, et
au moins une partie de la pluralité de premiers fils conducteurs et au moins une partie de la pluralité de deuxièmes fils conducteurs étant positionnés sur la seconde C2C FPCB.

12. Dispositif électronique selon la revendication 11, ladite épaisseur de la pluralité de premiers fils conducteurs et ladite épaisseur de la pluralité de deuxièmes fils conducteurs étant supérieures à l'épaisseur de la pluralité de quatrièmes fils conducteurs.

13. Dispositif électronique selon la revendication 10, au moins une partie de la pluralité de deuxièmes fils conducteurs et au moins une partie de la pluralité de quatrièmes fils conducteurs étant positionnées sur la première C2C FPCB, et
au moins une partie de la pluralité de premiers fils conducteurs étant positionnée sur la seconde C2C FPCB.

14. Dispositif électronique selon la revendication 13, ladite épaisseur de la pluralité de premiers fils conducteurs étant supérieure à l'épaisseur de la pluralité de quatrièmes fils conducteurs et la pluralité de deuxièmes fils conducteurs.

15. Dispositif électronique selon la revendication 1, comprenant en outre :
un troisième boîtier relié au deuxième boîtier de manière à pouvoir tourner autour de l'axe de rotation ; et
un troisième numériseur positionné dans le troisième boîtier et comprenant une pluralité de troisièmes lignes conductrices,
ledit deuxième numériseur positionné dans ledit deuxième boîtier comprenant en outre une pluralité de quatrième lignes conductrices,
lesdites premières extrémités de la pluralité de quatrièmes lignes conductrices étant respectivement reliées à une pluralité de troisièmes extrémités de sortie de signal du dispositif de commande,
lesdites secondes extrémités de la pluralité de quatrièmes lignes conductrices étant respectivement reliées aux premières extrémités de la pluralité de troisièmes lignes conductrices, et
lesdites secondes extrémités de la pluralité de troisièmes lignes conductrices étant respectivement reliées aux lignes de référence s'étendant depuis les extrémités de référence du dispositif de commande dans le troisième numériseur.
